# EUROPEAN PATENT SPECIFICATION

(11) **EP 3 636 699 B1**
(45) Date of publication and mention of the grant of the patent: **07.10.2026**
(21) Application number: 18812826.8
(22) Date of filing: 01.06.2018
(51) Int. Cl.: C08J 9/00, C08J 9/12, C08L 23/0807, C08L 23/14, C08J 9/18, C08J 9/232, C08K 5/20

(54) **EXPANDED POLYOLEFIN-BASED RESIN BEADS, PRODUCTION METHOD FOR EXPANDED POLYOLEFIN-BASED RESIN BEADS, AND MOLDED POLYOLEFIN-BASED RESIN FOAM BY IN-MOLD FOAMING**
AUF POLYOLEFIN BASIERENDE EXPANDIERTE HARZPERLEN, HERSTELLUNGSVERFAHREN FÜR EXPANDIERTE HARZPERLEN AUF POLYOLEFINBASIS UND DURCH IN-MOLD-GIESSEN GEGOSSENER HARZSCHAUMSTOFF AUF POLYOLEFINBASIS
PERLES DE RÉSINE À BASE DE POLYOLÉFINE EXPANSÉE, PROCÉDÉ DE PRODUCTION DE PERLES DE RÉSINE À BASE DE POLYOLÉFINE EXPANSÉE, ET MOUSSE DE RÉSINE À BASE DE POLYOLÉFINE MOULÉE PAR MOUSSAGE DANS LE MOULE

(30) Priority: 09.06.2017 JP 2017114241
(43) Date of publication of application: 15.04.2020
(73) Proprietor: Kaneka Corporation, Osaka-shi, Osaka 530-8288 (JP)
(72) Inventor: MIURA, Shintaro, Settsu-shi Osaka 566-0072 (JP)
(74) Representative: Vossius & Partner Patentanwälte Rechtsanwälte mbB
(86) International application number: PCT/JP2018/021206
(87) International publication number: WO 2018/225649

(56) References cited:
- EP-A1- 3 263 638
- WO-A1-2008/093877
- WO-A1-2016/136875
- WO-A1-2016/136875
- JP-A- 2008 138 020
- JP-A- 2008 138 020
- JP-A- 2008 255 286
- JP-A- 2009 114 359
- JP-A- 2010 077 359
- JP-A- 2010 077 359
- JP-A- 2010 180 295
- JP-A- 2011 231 256
- JP-A- S59 210 954

## Description

### Technical Field

The present invention relates to (i) polyolefin-based resin expanded particles which can be suitably applied in a polyolefin-based resin in-mold foamed molded product for use in, for example, shock-absorbing packing materials, shipping materials, thermal insulating materials, civil engineering and construction materials, and automotive components, (ii) a method of producing the polyolefin-based resin expanded particles, and (iii) a polyolefin-based resin in-mold foamed molded product.

### Background Art

Polyolefin-based resin in-mold foamed molded products (also referred to here simply as "in-mold foamed molded products") are used in a wide variety of applications, including e.g.: shock-absorbing packing materials; shipping materials such as returnable containers and shock-absorbing materials for transport by truck; thermal insulating materials; civil engineering and construction materials; and automotive components (such as tool boxes and floor core materials). However, such polyolefin-based resin in-mold foamed molded products can produce an unpleasant, high-frequency frictional noise (a squeaking sound) when friction occurs between such in-mold foamed molded products, or between such an in-mold foamed molded product and e.g., some other plastic product or metallic product.

The techniques disclosed in Patent Literatures 1 to 3 are known conventional methods for reducing the frictional noise of polyolefin-based resin in-mold foamed molded products. Patent Literature 1 discloses a method of obtaining a polypropylene-based resin foamed molded product by molding polypropylene-based resin expanded particles, the particles being made from a resin composition obtained by melting and kneading polypropylene-based resin with an olefin-based elastomer and fatty acid amide.

Patent Literatures 2 and 3 each disclose, as an effective means of reducing frictional noise, a method of obtaining a polypropylene-based resin foamed molded product by molding polypropylene-based resin expanded particles, the particles being made from a resin composition obtained by melting and kneading polypropylene-based resin with a specific polyethylene wax.
Patent Literature 4 discloses a thermoplastic resin composition comprising a thermoplastic resin and organic fine particles.
Patent Literature 5 discloses a rubbing noise inhibitor for an expanded resin-molded product.
Patent Literature 6 discloses an expanded polyolefin resin particle obtained by expanding, by using water and/or an inorganic gas as a foaming agent, a polyolefin resin particle that contains a polyolefin resin (a); a product (b) obtained by heating and kneading a mixture containing a polypropylene resin (1), a polypropylene wax (2), a polyorganosiloxane (3) containing at least one silicon-atom-bound radical polymerizable functional group per molecule, and an organic peroxide (4); and a water absorbing substance (c).

### Citation List

### [Patent Literature]

[Patent Literature 1]
   Japanese Patent Application Publication Tokukai No. 2008-138020
[Patent Literature 2]
   Japanese Patent Application Publication Tokukai No. 2010-77359
[Patent Literature 3]
   Japanese Patent Application Publication Tokukai No. 2013-67816
**[Patent** Literature 4] WO 2008/093877 A1
[Patent Literature 5] JP 2011-231256 A
[Patent Literature 6] EP 3 263 638 A1

### Summary of Invention

### Technical Problem

However, conventional techniques such as those above are insufficient and have room for improvement in terms of providing polyolefin-based resin expanded particles which enable a polyolefin-based resin in-mold foamed molded product that (i) exhibits reduced frictional noise and noise occurrence risk in the long term and (ii) has excellent surface glossiness.

The present invention has been accomplished in view of the above problems. An object of the present invention is to provide novel polyolefin-based resin expanded particles which enable a polyolefin-based resin in-mold foamed molded product that (i) exhibits reduced frictional noise and noise occurrence risk in the long term and (ii) has excellent surface glossiness.

### Solution to Problem

The present invention is as defined in the appended claims.

As a result of diligent research in view of the above problems, the inventor of the present invention arrived at the present invention upon novelly finding that it is possible to solve the above problems with polyolefin-based resin expanded particles as defined in claim 1.

A method of producing polyolefin-based resin expanded particles in accordance with the present invention is defined in claim 7.

### Advantageous Effects of Invention

An embodiment of the present invention makes it possible to provide polyolefin-based resin expanded particles which enable a polyolefin-based resin in-mold foamed molded product that (i) exhibits reduced frictional noise and noise occurrence risk in the long term and (ii) has excellent surface glossiness.

### Brief Description of Drawings

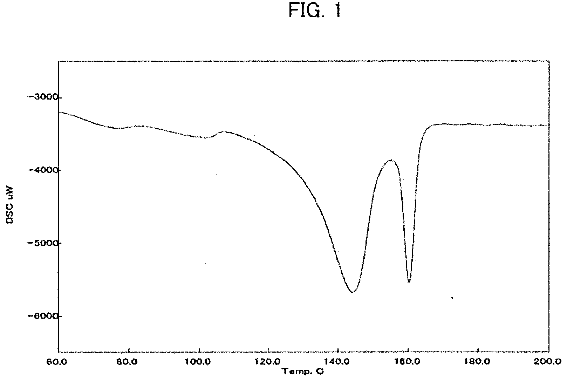

Fig. 1 is an example of a DSC curve (DSC curve of Example 1) obtained by differential scanning calorimetry (DSC) carried out on polypropylene-based resin expanded particles in accordance with an embodiment of the present invention, in which the particles at a temperature of 40°C are heated to 220°C at a temperature increase rate of 10°C/minute. The horizontal axis represents temperature. The vertical axis represents heat absorption quantity.

### Description of Embodiments

The following description will discuss embodiments of the present invention. The present invention is not, however, limited to the embodiments below. The present invention is not limited to the configurations described below, but may be altered in various ways within the scope of the claims by a person skilled in the art. The present invention also encompasses, in its technical scope, any embodiment or example derived by combining technical means disclosed in differing embodiments and Examples. Further, it is possible to form a new technical feature by combining the technical means disclosed in the respective embodiments.

Any numerical range expressed as "A to B" in the present specification means "not less than A and not more than B (i.e., a range from A to B which includes both A and B)" unless otherwise stated.

### 1. Technical Idea of an Embodiment of the Present Invention

As a result of diligent research, the inventor found that the prior art disclosed in the above Documents 1 to 3 has room for improvement or problems as described below.

The techniques disclosed in Patent Literature 1 are a known method of reducing frictional noise of a polyolefin-based resin foamed molded product. The inventor of the present invention found, however, that the polyolefin-based resin foamed molded product of Patent Literature 1 actually did produce frictional noise and had insufficient practical properties.

A phenomenon called the "stick-slip phenomenon" is a known vibration phenomenon in which slipping and stopping repeatedly occur when two types of objects are slid while in contact with each other. Standard "VDA 230-206" of the German Association of the Automotive Industry is one example of a stick-slip test which is used as a method of evaluating the risk of noising occurring due to the stick-slip phenomenon. This evaluation method provides a noise occurrence risk index (RPN), which is determined from the values of vibration parameters (frictional force and acceleration) as observed when two types of objects are caused to slide while in contact with each other and with a certain load applied thereto. It is known that objects having a higher RPN are more likely to generate noise and, when used in automotive components, have a stronger correlation to the actual occurrence of noise between such objects. As a result of research, the inventor of the present invention found that although the polypropylene-based resin foamed molded products disclosed in Patent Literatures 2 and 3 were effective in reducing frictional noise, these products had room for improvement in terms of the noise occurrence risk index thereof.

Recently, there has been a demand for polyolefin-based resin in-mold foamed molded products which have a high-quality appearance. This demand for a high-quality appearance applies particularly to polyolefin-based resin in-mold foamed molded products that are used as components of automotive interiors. As a result of research, the inventor of the present invention found that the polyolefin-based resin foamed molded product of Patent Literature 1 and the polypropylene-based resin foamed molded products of Patent Literatures 2 and 3 lacked surface glossiness as in-mold foamed molded products, and thus were lacking in high-quality appearance and had room for improvement.

An embodiment of the present invention was achieved in view of the above problems. An object of an embodiment of the present invention is to obtain polyolefin-based resin expanded particles which enable a polyolefin-based resin in-mold foamed molded product that satisfies the following (a) and (b): (a) exhibits, in the long term, reduced occurrence of unpleasant, high-frequency frictional noise (squeaking sounds) in cases where friction occurs between polyolefin-based in-mold foamed molded products or between a polyolefin-based in-mold foamed molded product and e.g., some other plastic product or metallic product, and reduced possibility of noise occurring (noise occurrence risk) in such cases; and (b) has excellent surface glossiness and a high-quality appearance.

### 2. Polyolefin-Based Resin Expanded Particles

Polyolefin-based resin expanded particles in accordance with the present invention include: a polyolefin-based resin (a); a product (b) containing: an olefin-based elastomer (Component 1); a copolymer (Component 2) which differs from the Component 1 and is a copolymer of ethylene and at least one type of vinyl monomer; and a higher fatty acid amide (Component 3); a butene copolymer polyethylene wax (c); and a water absorbing substance (d).

### 2-1. Polyolefin-Based Resin (a)

The polyolefin-based resin (a) (hereinafter also referred to simply as a "polyolefin-based resin") used in the present invention is **at least one selected from the group consisting of** polyethylene-based resin and polypropylene-based resin **wherein the** polyethylene-based resin **is at least one selected from the group consisting of** high-density polyethylene, medium-density polyethylene, low-density polyethylene, linear low-density polyethylene, and styrene-modified polyethylene-based resin **and the** polyethylene-based resin **includes** a comonomer which is **at least one selected from the group consisting of** 1-butene, 1-pentene, 1-hexene, 3,3-dimethyl-1-butene, 4-methyl-1-pentene, 4,4-dimethyl-1-pentene, and 1-octene. Each of these examples may be used alone, or in combinations of two or more. In order for the density of a copolymer to fall within the above-described ranges, a copolymerization amount of the comonomer is preferably not less than approximately 1 weight% and not more than approximately 12 weight%.

A melting point of the polyethylene-based resin used in an embodiment of the present invention is not particularly limited, but is, for example, preferably not lower than 110°C and not higher than 135°C, and more preferably not lower than 115°C and not higher than 130°C. In a case where the melting point of the polyethylene-based resin is less than 110°C, there is tendency for a foamed molded product to have reduced heat resistance. In a case where the melting point of the polyethylene-based resin exceeds 135°C, there tends to be difficulty in increasing the expansion ratio of expanded particles during production of the expanded particles.

Note that in the sections titled "2. Polyolefin-Based Resin Expanded Particles" and "3. Method of Producing Polyolefin-Based Resin Expanded Particles and In-Mold Foamed Molded Product", the following (a) and (b) apply, unless stated otherwise: (a) polyolefin-based resin expanded particles in accordance with an embodiment of the present invention may be referred to simply as "expanded particles"; and (b) a polyolefin-based resin in-mold foamed molded product obtained by carrying out in-mold foam molding of polyolefin-based resin expanded particles in accordance with an embodiment of the present invention may be referred to simply as an "in-mold foamed molded product". Furthermore, the word "polyolefin" as used in terms such as "polyolefin-based resin expanded particles" and "polyolefin-based resin in-mold foamed molded product" is dependent on the polyolefin-based resin which is used. For example, in a case where polyethylene is used as the polyolefin-based resin, expanded particles produced from the resin are polyethylene-based resin expanded particle, and an in-mold foamed molded product produced from the particles is a polyethylene-based resin in-mold foamed molded product.

Note here that the melting point of a polyethylene-based resin refers to that measured via differential scanning calorimetry (hereinafter, "DSC"). A specific procedure is as follows: (1) 5 mg to 6 mg of polyethylene-based resin having a temperature of 40°C is heated to 220°C at a temperature increase rate of 10°C/minute, so that the resin is melted; (2) thereafter, the resin having a temperature of 220°C is cooled to 40°C at a temperature decrease rate of 10°C/minute, so that the resin crystalizes; (3) thereafter, the resin having a temperature of 40°C is heated to 220°C at a temperature increase rate of 10°C/minute. The melting point can be determined as being the temperature of the DSC curve peak (melting peak) obtained during the second temperature raise (i.e., the curve obtained during step (3)).

A melt index (hereinafter, "MI") of the polyethylene-based resin used in an embodiment of the present invention is not particularly limited, but is preferably not less than 0.1 g/10 minutes and not more than 10 g/10 minutes, more preferably not less than 0.3 g/10 minutes and not more than 8 g/10 minutes, and even more preferably not less than 0.5 g/10 minutes and not more than 5 g/10 minutes.

In a case where the MI of the polyethylene-based resin is less than 0.1 g/10 minutes, there tends to be difficulty in increasing the expansion ratio of expanded particles during production of the expanded particles, and there tends to be a deterioration in a surface property of a foamed molded product. In a case where the MI of the polyethylene-based resin exceeds 10 g/10 minutes, resultant expanded particles will have cells in communication with each other. As a result, there tends to be (a) a decrease in the compressive strength of a foamed molded product and/or (b) a deterioration of a surface property of the foamed molded product.

Note here that the value of MI is measured with use of an MI measurement apparatus as specified in JIS K7210:1999, under the following conditions: orifice diameter of ø2.0959 mm ±0.005 mm; orifice length of 8.000 mm ±0.025 mm; load of 2160 g; and temperature of 190°C ±0.2°C.

A polypropylene-based resin used in an embodiment of the present invention is not particularly limited. Possible examples of the polypropylene-based resin include polypropylene homopolymers, ethylene/propylene random copolymers, butene-1/propylene random copolymers, ethylene/butene-1/propylene random copolymers, ethylene/propylene block copolymers, butene-1/propylene block copolymers, propylene-chlorinated vinyl copolymers, propylene/maleic anhydride copolymers, and styrene-modified polypropylene-based resins. Among these, ethylene/propylene random copolymers and ethylene/butene-1/propylene random copolymers are suitable in that they provide favorable expandability to expanded particles obtained therefrom, and favorable moldability to foamed molded products obtained therefrom. Note that "butene-1" above is synonymous with "1-butene".

Consider a case (hereinafter "Case A") where, in the present production method, used as the polyolefin-based resin (a) is an ethylene/propylene random copolymer or an ethyleoe/butene-1/propylene random copolymer, each of which is a polypropylene-based resin. In Case A, an amount of ethylene contained in the ethylene/propylene random copolymer or the ethylene/butene-1/propylene random copolymer is preferably not less than 0.2 weight% and not more than 10 weight%, with respect to the 100 weight% of the copolymer.

In Case A, an amount of butene contained in the ethylene/butene-1/propylene random copolymer is preferably not less than 0.2 weight% and not more than 10 weight%, with respect to 100 weight% of the copolymer. In Case A, a combined amount of ethylene and butene-1 contained in the ethylene/propylene random copolymer or the ethylene/butene-1/propylene random copolymer is preferably not less than 0.5 weight% and not more than 10 weight%, with respect to 100 weight% of the copolymer. In Case A, in a case where the amount of ethylene or butene-1 contained in the ethylene/propylene random copolymer or the ethylene/butene-1/propylene random copolymer is less than 0.2 weight%, there tends to be (i) a deterioration in the expandability of expanded particles during production of the expanded particles and/or (ii) a deterioration in the moldability of resulting expanded particles. In Case A, in a case where the amount of ethylene or butene-1 contained in the ethylene/propylene random copolymer or the ethylene/butene-1/propylene random copolymer exceeds 10 weight%, there tends to be a deterioration in the mechanical properties of an in-mold foamed molded product.

A polymerization catalyst to be used in synthesizing a polypropylene-based resin for use in an embodiment of the present invention is not limited to a particular kind. Possible examples of the polymerization catalyst polymerization catalyst include a Ziegler catalyst and a metallocene catalyst.

A melting point of a polypropylene-based resin used in an embodiment of the present invention is not particularly limited, but is, for example, preferably not lower than 125°C and not higher than 160°C, and more preferably not lower than 130°C and not higher than 155°C. In a case where the melting point of the polypropylene-based resin is lower than 125°C, there is tendency for an in-mold foamed molded product to have reduced heat resistance. In a case where the melting point of the polyethylene-based resin exceeds 160°C, there tends to be difficulty in increasing the expansion ratio of expanded particles during production of the expanded particles.

Note here that the melting point of a polypropylene-based resin refers to that measured via DSC. A specific procedure is as follows: (1) 5 mg to 6 mg of polypropylene-based resin having a temperature of 40°C is heated to 220°C at a temperature increase rate of 10°C/minute, so that the resin is melted; (2) thereafter, the resin having a temperature of 220°C is cooled to 40°C at a temperature decrease rate of 10°C/minute, so that the resin crystalizes; (3) thereafter, the resin having a temperature of 40°C is heated to 220°C at a temperature increase rate of 10°C/minute. The melting point can be determined as being the temperature of the DSC curve peak (melting peak) obtained during the second temperature raise (i.e., the curve obtained during step (3)).

A crystal melting heat quantity of a polypropylene-based resin used in an embodiment of the present invention is not particularly limited, but is preferably not less than 50 J/g and not more than 110 J/g, and more preferably not less than 75 J/g and not more than 100 J/g. In a case where the crystal melting heat quantity of the polypropylene-based resin is less than 50 J/g, it becomes difficult for resultant expanded particles to maintain their shape in in-mold foam molding. In a case where the crystal melting heat quantity of the polypropylene-based resin exceeds 110 J/g, it becomes difficult to increase the expansion ratio of expanded particles during production of the expanded particles.

Note here that the crystal melting heat quantity of the polypropylene-based resin refers to that measured by a DSC measurement method identical to the one used for measuring the melting point. Specifically, after the above-described steps (1) to (3) are carried out, the crystal melting heat quantity can be determined with use of the peak (melting peak) of a DSC curve obtained during the second temperature raise (i.e., the curve obtained during step (3)), via the following method. Specifically, the crystal melting heat quantity can be determined as being the quantity of heat encompassed by (i) a first tangential line and (ii) the melting peak, where the first tangential line is tangential to a low temperature side differential curve and extends toward the low temperature side differential curve from an intersection of (i) a line extending from the melting peak toward a higher temperature side and (ii) the baseline of the high temperature side.

An MI of a polypropylene-based resin used in an embodiment of the present invention is not particularly limited, but is preferably not less than 3 g/10 minutes and not more than 30 g/10 minutes, more preferably not less than 4 g/10 minutes and not more than 20 g/10 minutes, and even more preferably not less than 5 g/ 10 minutes and not more than 18 g/10 minutes.

In a case where the MI of the polypropylene-based resin is less than 3 g/10 minutes, there tends to be difficulty in increasing the expansion ratio of expanded particles during production of the expanded particles. In a case where the MI of the polypropylene-based resin exceeds 30 g/ 10 minutes, expanded particles obtained from the polypropylene-based resin will have cells in communication with each other. As a result, there tends to be (a) a decrease in the compressive strength of a foamed molded product and/or (b) a deterioration of a surface property of the foamed molded product.

Consider a case where the MI of the polypropylene-based resin falls in a range of not less than 3 g/ 10 minutes and not more than 30 g/ 10 minutes. In such a case, it is easy to obtain polypropylene-based resin expanded particles having a comparatively large expansion ratio. Furthermore, in such a case, there are the advantages that a foamed molded product will have an excellent surface appearance and a small rate of dimensional shrinkage.

Note here that the value of MI is measured with use of an MI measurement apparatus as specified in JIS K7210:1999, under the following conditions: orifice diameter of ø2.0959 mm ±0.005 mm; orifice length of 8.000 mm ±0.025 mm; load of 2160 g; and temperature of 230 ±0.2°C.

### 2-2. Product (b)

Polyolefin-based resin particles in the present invention contain a product (b) which contains: an olefin-based elastomer (Component 1); a copolymer (Component 2) which differs from the Component 1 and is a **copolymer of ethylene and at least one type of vinyl monomer as defined in claim** 1; and a higher fatty acid amide (Component 3). Hereinafter, this product may be referred to simply as "product (b)". In the present specification, the "olefin-based elastomer (Component 1)" may be referred to simply as "Component 1," the "copolymer (Component 2) which differs from the Component 1 and is a copolymer of ethylene and at least one type of vinyl monomer" may be referred to simply as "Component 2," and the "higher fatty acid amide (Component 3)" may be referred to simply as "Component 3".

The olefin-based elastomer (Component 1) used in the product (b) is a component which exhibits affinity to the higher fatty acid amide of Component 3. Possible examples of the Component 1 include the following (a) through (c): (a) an ethylene-α-olefin copolymer rubber; (b) an ethylene-α-olefin-nonconjugated diene copolymer rubber; and (c) a graft copolymer whose backbone component is a polymer segment composed of, for example, an ethylene-α-olefin copolymer rubber and/or an ethylene-α-olefin-nonconjugated diene copolymer rubber, and whose side-chain component is a vinyl polymer segment formed from at least one type of vinyl-based monomer.

Examples of α-olefins for forming a copolymer rubber include propylene, 1-butene, 1-pentene, 1-hexene, 1-octene, 1-decene, 2-methyl-1-propene, 3-methyl-1-pentene, 4-methyl-1-pentene, and 5-methyl-1-hexene. Each of these α-olefins can be used alone or in combinations of two or more. Examples of the nonconjugated diene (nonconjugated diene compound) include dicyclopentadiene, 1,4-hexadiene, cyclooctadiene, methylene norbornene, ethylidene norbornene, and vinyl norbornene.

Specific examples of the ethylene-α-olefin copolymer rubber include ethylene-propylene copolymer rubber, ethylene-1-butene copolymer rubber, ethylene-1-hexene copolymer rubber, and ethylene-1-octene copolymer rubber. Out of these examples, ethylene-propylene copolymer rubber and ethyvlene-1-octene copolymer rubber are particularly preferable because they (i) have excellent affinity with the higher fatty acid amide of Component 3 and (ii) make it possible to obtain a foamed molded product having high elastic recovery.

With regard to specific examples of the ethylene-α-olefin-nonconjugated diene copolymer rubber, preferable examples include ethylene-1-butene-nonconjugated diene copolymer rubber and ethylene-propylene-nonconjugated diene copolymer rubber, and particularly preferable examples include ethylene-propylene-ethylidene norbornene copolymer rubber and ethylene-propylene-dicyclopentadiene copolymer rubber. These copolymer rubbers have excellent affinity with the higher fatty acid amide of Component 3 and make it possible to obtain a foamed molded product having high elastic recovery. Each of the above ethylene-α-olefin copolymer rubbers may be used alone or in combinations of two or more. Each of the above ethylene-α-olefin-nonconjugated diene copolymer rubbers may be used alone or in combinations of two or more. It is also possible to employ a combination of (i) one or more of the ethylene-α-olefin copolymer rubbers and (ii) one or more of the ethylene-α-olefin-nonconjugated diene copolymer rubbers.

It is possible to use, as the olefin-based elastomer (Component 1), an elastomer composed of a graft copolymer having (i) a backbone component which is a polymer segment composed of, for example, the above-described ethylene-α-olefin copolymer rubber and/or ethylene-α-olefin-nonconjugated diene copolymer rubber, and (ii) a side-chain component which is a vinyl polymer segment formed from at least one type of vinyl-based monomer.

A vinyl monomer which forms the vinyl-based polymer segment is formed from at least one type of vinyl monomer as described above. The vinyl monomer is at least one type of monomer selected from the group consisting of: (meth)acrylic acid alkyl ester whose alkyl chain length is 1 to 20 carbon atoms; a vinyl monomer having an acid group; a vinyl monomer having a hydroxyl group; a vinyl monomer having an epoxy group; a vinyl monomer having a cyano group; and styrene.

Note that in the present specification, "(meth)acrylic" is used as a collective term for both "acrylic" and "methacrylic".

More specific examples of the vinyl monomer include methyl (meth)acrylate, ethyl (meth)acrylate, butyl (meth)acrylate, hexyl (meth)acrylate, 2-ethylhexyl (meth)acrylate, lauryl (meth)acrylate, stearyl (meth)acrylate, (meth)acrylic acid, maleic acid, maleic anhydride, 2-hydroxyethyl (meth)acrylate, 2-hydroxypropyl (meth)acrylate, glycidyl (meth)acrylate, (meth)acrylonitrile, and styrene.

Out of these examples, e.g. the following are particularly preferable: methyl (meth)acrylate, ethyl (meth)acrylate, butyl (meth)acrylate, (meth)acrylic acid, 2-hydroxyethyl (meth)acrylate, 2-hydroxypropyl (meth)acrylate, glycidyl (meth)acrylate, (meth)acrylonitrile, and styrene. These examples are particularly preferable in that they have high interaction with the higher fatty acid amide of Component 3 and enable easy adjustment of a surface migration property of Component 3. Here, the "surface migration property" of Component 3 refers to the degree to which Component 3 migrates to the surface of an in-mold foamed molded product which is ultimately obtained. The surface migration property of the Component 3 can affect the reduction of frictional noise and noise occurrence risk.

The copolymer (Component 2) (which differs from Component 1 and is a copolymer of ethylene and at least one type of vinyl monomer) used in the product (b) is a component which has low affinity to the higher fatty acid amide of **Component 3. Component 2 is at least one type of copolymer selected from the group consisting** of an ethylene-acrylic acid copolymer, an ethylene-methyl acrylate copolymer, an ethylene-methyl methacrylate copolymer, an ethylene-ethyl acrylate copolymer, an ethylene-isobutyl acrylate copolymer, an ethylene-n-butyl acrylate copolymer, an ethylene-2-ethylhexyl acrylate copolymer, an ethylene-ethyl acrylate-maleic anhydride copolymer, an ethylene-ethyl acrylate-glycidyl methacrylate copolymer, an ethylene-glycidyl methacrylate copolymer, an ethylene-vinyl acetate-glycidyl methacrylate copolymer, an ethylene-vinyl acetate copolymer, and saponified products of any of these. Each of these examples of Component 2 may be used alone or in combinations of two or more.

Out of these examples, it is preferable to use as Component 2 a copolymer of ethylene and at least one type of vinyl monomer, in which copolymer the vinyl monomer is a (meth)acrylic acid ester having a C1 to C4 lower alkyl group or vinyl acetate. Such a copolymer is preferable in that (i) the polarity can be greatly changed and (ii) the copolymer has excellent non-affinity to the higher fatty acid amide of Component 3. Specific examples of such a Component 2 include an ethylene-methyl acrylate copolymer, an ethylene-methyl methacrylate copolymer, an ethylene-ethyl acrylate copolymer, an ethylene-n-butyl acrylate copolymer, an ethylene-vinyl acetate copolymer, and saponified products of any of these.

The higher fatty acid amide (Component 3) used in the product (b) is preferably a substance formed with use of a C10 to C25 higher fatty acid as a base material. Possible examples of such a higher fatty acid amide include saturated fatty acid amides, unsaturated fatty acid amides, and bis fatty acid amides. A higher fatty acid amide (Component 3) formed with use of a higher fatty acid of less than C10 as a base material has insufficient compatibility with Component 1 and is not sufficiently effective as Component 3. A higher fatty acid of greater than C25 is difficult to obtain and is impractical.

Specific examples of saturated fatty acid amides that can be suitably used as the higher fatty acid amide (Component 3) include lauric acid amide, palmitic acid amide, stearic acid amide, and behenic acid amide. Examples of unsaturated fatty acid amides that can be suitably used as the higher fatty acid amide (Component 3) include erucic acid amide, oleic acid amide, brassidic acid amide, and elaidic acid amide. Examples of bis fatty acid amides that can be suitably used as the higher fatty acid amide (Component 3) include methylene bis(stearic acid amide), methylene bis(lauric acid amide), ethylene bis(stearic acid amide), ethylene bis(lauric acid amide), methylene bis(oleic acid amide), methylene bis(erucic acid amide), ethylene bis(oleic acid amide), and ethylene bis(erucic acid amide). Each of these examples of the higher fatty acid amide may be used alone or in combinations of two or more.

Out of these slip additives, examples which particularly improve the effect of reducing frictional noise include stearic acid amide, behenic acid amide, oleic acid amide, erucic acid amide, ethylene bis(oleic acid amide) or ethylene bis(erucic acid amide) oleic acid amide and erucic acid amide.

The product (b) is produced by heating, melting, and mixing Component 1, Component 2, and Component 3. A heating temperature used is determined as appropriate based on (i) the melting temperatures of Component 1 and Component 2 and (ii) the heat resistance temperature of the slip additive. The heating temperature is preferably 70°C to 300°C. In a case where the heating temperature is lower than 70°C, the rubber and/or copolymer may not be melted completely, and the melt viscosity may increase. As a result, Component 1, Component 2, and Component 3 will not be sufficiently mixed, and phase separation and/or laminar peeling may occur. A heating temperature of lower than 70°C is therefore not preferable. A heating temperature exceeding 300°C will cause severe decomposition of the rubber, copolymer, and/or slip additive and is therefore not preferable. A known method is employed as the method of melting and mixing. Possible examples of the method of melting and mixing include a kneading method utilizing a single-screw extruder, a twin-screw extruder, a Banbury mixer, a kneader, or a roll.

An amount of the product (b) to be added to the polyolefin-based resin (a) is not less than 3 parts by weight and not more than 10 parts by weight, and preferably not less than 3 parts by weight and not more than 9 parts by weight. In a case where the added amount of the product (b) is less than 3 parts by weight, the product (b) will not bring about the effect of reducing noise occurrence risk in a foamed molded product. In a case where the added amount of the product (b) exceeds 10 parts by weight, wrinkling will occur in expanded particles due to contraction, and wrinkling will occur in the surface of the in-mold foamed molded product which is ultimately obtained. As a result, due to the effects of the wrinkling, vibration is produced when test pieces of the foamed molded product used in the noise occurrence risk index evaluation are rubbed against each other, and there is therefore an increased likelihood of noise being produced (i.e., and increased noise occurrence risk).

The proportions of Component 1, Component 2, and Component 3 in the product (b) are preferably as follows: 0.15 parts by weight to 9.5 parts by weight of Component 1, 0.15 parts by weight to 9.5 parts by weight of Component 2, and 0.15 parts by weight to 6.0 parts by weight of Component 3, each with respect to 100 parts by weight of the polyolefin-based resin (a). These proportions are more preferably 0.3 parts by weight to 9.0 parts by weight of Component 1, 0.3 parts by weight to 9.0 parts by weight of Component 2, and 0.3 parts by weight to 5.0 parts by weight of Component 3.

In a case where the amount of Component 1 is less than 0.15 parts by weight, there will be a decrease in the affinity between Component 1 and the higher fatty acid amide of Component 3. As a result, a foamed molded product will be prone to excessive bleeding of the higher fatty acid amide of Component 3. In a case where the amount of Component 1 exceeds 9.5 parts by weight, there will be a deterioration in the surface migration property of the higher fatty acid amide of Component 3. As a result, there will be a decrease in the frictional noise reducing effect brought about by the Component 3. In a case where the amount of Component 2 is less than 0.15 parts by weight, there will be a deterioration in the surface migration property of the higher fatty acid amide (Component 3). As a result, there will be a decrease in the frictional noise reducing effect brought about by the Component 3. In a case where the amount of Component 2 exceeds 9.5 parts by weight, there will be a decrease in the affinity between Component 2 and the higher fatty acid amide (Component 3). As a result, a foamed molded product will be prone to excessive bleeding of the higher fatty acid amide (Component 3). Such amounts of Component 2 are therefore not preferable. In a case where the amount of the higher fatty acid amide of Component 3 is less than 0.15 parts by weight, there will be a decrease in the frictional noise reducing effect brought about by Component 3. In a case where the amount of the higher fatty acid amide of Component 3 exceeds 6.0 parts by weight, there will be excessive bleeding of the higher fatty acid amide (Component 3) in a foamed molded product. Such amounts of Component 3 are therefore not preferable.

In an embodiment of the present invention, in a case where polyolefin-based resin particles include the product (b) but do not include a butene copolymer polyethylene wax (c), it becomes impossible to ultimately obtain a polyolefin-based resin in-mold foamed molded product which has sufficiently reduced frictional noise and occurrence of noise. In a case where the polyolefin-based resin particles include both the product (b) and the butene copolymer polyethylene wax (c), it becomes possible to ultimately obtain polyolefin-based resin in-mold foamed molded product which has sufficiently reduced frictional noise and occurrence of noise.

The following are preferable specific examples of combinations of compounds used as Component 1, Component 2, and Component 3 in the product (b) in an embodiment of the present invention. These examples are written in the format "[Component 1 / Component 2 / Component 3]": [ethylene propylene copolymer rubber/ ethylene-ethyl acrylate copolymer / erucic acid amide), [ethylene propylene copolymer rubber/ ethylene-ethyl acrylate copolymer / oleic acid amide), [ethylene propylene copolymer rubber/ ethylene-methyl methacrylate copolymer / erucic acid amide), [ethylene propylene copolymer rubber/ ethylene-methyl methacrylate copolymer / oleic acid amide], ethylene octene copolymer rubber/ ethylene-ethyl acrylate copolymer / erucic acid amide], [ethylene octene copolymer rubber/ ethylene-ethyl acrylate copolymer / oleic acid amide], [ethylene octene copolymer rubber/ ethylene-methyl methacrylate copolymer / erucic acid amide], [ethylene octene copolymer rubber/ ethylene-methyl methacrylate copolymer / oleic acid amide], [graft copolymer A / ethylene-ethyl acrylate copolymer / erucic acid amide), [graft copolymer A / ethylene-ethyl acrylate copolymer / oleic acid amide], [graft copolymer A / ethylene-methyl methacrylate copolymer / erucic acid amide], [graft copolymer A / ethylene-methyl methacrylate copolymer / oleic acid amide], [graft copolymer B / ethylene-ethyl acrylate copolymer / erucic acid amide], [graft copolymer B / ethylene-ethyl acrylate copolymer / oleic acid amide], [graft copolymer B / ethylene-methyl methacrylate copolymer / erucic acid amide], and [graft copolymer B / ethylene-methyl methacrylate copolymer / oleic acid amide]. Here, "graft copolymer A" refers to a graft copolymer having (i) a backbone component which is a polymer segment composed of ethylene octene copolymer rubber, and (ii) a side-chain component which is a vinyl polymer segment formed from methyl methacrylate, methacrylic acid, and butyl acrylate. "Graft copolymer B" refers to a graft copolymer having (i) a backbone component which is a polymer segment composed of ethylene propylene copolymer rubber and (ii) a side-chain component which is a vinyl polymer segment formed from styrene, butyl acrylate, and 2-hydroxypropyl methacrylate.

### 2-3. Butene Copolymer Polyethylene Wax (c)

Polyolefin-based resin particles in accordance with the present invention include the butene copolymer polyethylene wax (c). The butene copolymer polyethylene wax (c) used in an embodiment of the present invention is a wax which includes, as its monomer components, ethylene and butene. The amount of butene contained in the butene copolymer polyethylene wax is preferably not less than 2 weight% and not more than 12 weight%, more preferably not less than 5 weight% and not more than 10 weight%, and even more preferably not less than 7 weight% and not more than 9 weight%. In a case where the contained amount of butene is less than 2 weight%, it is difficult to obtain a frictional noise reducing effect from the butene copolymer polyethylene wax (c). In a case where the contained amount of butene exceeds 12 weight%, there tends to be a decrease in the mechanical strength of a polyolefin-based resin composition produced by adding the butene copolymer polyethylene wax to a polyolefin-based resin.

The melting point of the butene copolymer polyethylene wax (c) used in an embodiment of the present invention is preferably not lower than 40°C and not higher than 130°C, even more preferably not lower than 80°C and not higher than 110°C, and particularly preferably not lower than 85°C and not higher than 110°C. In a case where the melting point of the butene copolymer polyethylene wax (c) is lower than 40°C, there tends to be unstable dispersion of polyolefin-based resin particles in a pressure-resistant vessel used when producing polyolefin-based resin pre-expanded particles. Furthermore, there also tends to be a decrease in the mechanical strength of a polyolefin-based resin composition which would be produced. In a case where the melting point is higher than 130°C, the butene copolymer polyethylene wax (c) may not bring about a frictional noise reducing effect.

Note here that the melting point of the butene copolymer polyethylene wax (c) refers to that measured via DSC. A specific procedure is as follows: (1) 5 mg to 6 mg of butene copolymer polyethylene wax having a temperature of 40°C is heated to 220°C at a temperature increase rate of 10°C/minute, so that the wax is melted; (2) thereafter, the wax having a temperature of 220°C is cooled to 40°C at a temperature decrease rate of 10°C/minute, so that the wax crystalizes; (3) thereafter, the wax having a temperature of 40°C is heated to 220°C at a temperature increase rate of 10°C/minute. The melting point can be determined as being the temperature of the DSC curve peak (melting peak) obtained during the second temperature raise (i.e., the curve obtained during step (3)).

The butene copolymer polyethylene wax (c) used in an embodiment of the present invention preferably has a viscosity average molecular weight of not less than 1000 and not more than 5000. In a case where the viscosity average molecular weight is less than 1000, the butene copolymer polyethylene wax (c) is prone to being sticky. This impairs processability when the butene copolymer polyethylene wax (c) and polyolefin-based resin are melted and kneaded. In a case where the viscosity average molecular weight exceeds 5000, the butene copolymer polyethylene wax (c) is less likely to appear at the surface of the polyolefin-based resin particles when the butene copolymer polyethylene wax (c) and polyolefin-based resin are melted and kneaded, and the butene copolymer polyethylene wax (c) may not bring about a frictional noise reducing effect.

Examples of polymerization methods used during production of the butene copolymer polyethylene wax (c) include a Ziegler catalyst method and a metallocene catalyst method. Out of these, the metallocene catalyst method is particularly preferable because it results in a narrow distribution of molecular weight of the butene copolymer polyethylene wax (c) and makes it more likely for the butene copolymer polyethylene wax (c) to bring about a frictional noise reducing effect.

An amount of the butene copolymer polyethylene wax (c) to be added to the polyolefin-based resin is not less than 2 parts by weight and not more than 10 parts by weight, and preferably not less than 3 parts by weight and not more than 9 parts by weight, with respect to 100 parts by weight of the polyolefin-based resin. In a case where the added amount of the butene copolymer polyethylene wax (c) is less than 2 parts by weight, there tends to be a deterioration of the frictional noise reducing effect in a foamed molded product, and there is no manifestation of a noise occurrence risk reducing effect by the butene copolymer polyethylene wax (c). In a case where the added amount of the butene copolymer polyethylene wax (c) exceeds 10 parts by weight, wrinkling will occur in expanded particles due to contraction, and wrinkling will occur in the surface of the in-mold foamed molded product which is ultimately obtained. As a result, due to the effects of the wrinkling, vibration is produced when test pieces of the foamed molded product used in the noise occurrence risk index evaluation are rubbed against each other, and there is therefore an increased likelihood of noise being produced.

### 2-4. Water Absorbing Substance (d)

The water absorbing substance (d) used in the present invention is a substance which increases the amount of moisture impregnated in polyolefin-based resin particles during production of the polyolefin-based resin expanded particles. The water absorbing substance (c) is able to impart expandability to the polyolefin resin particles in a case where water is used as an expanding agent. Furthermore, although the reasons are unclear, adding the water absorbing substance (d) allows the surface of the ultimately obtained in-mold foamed molded product to have excellent glossiness.

Examples of the water absorbing substance (d) used in an embodiment of the present invention include water-absorbing organic substances such as glycerin, diglycerin, polyethylene glycol, C12 to C18 fatty alcohols (e.g., pentaerythritol, cetyl alcohol, and stearyl alcohol), melamine, isocyanuric acid, and a melamine-isocyanuric acid condensate. These examples of water absorbing substances may be used in combinations of two or more.

Out of these examples, glycerin and polyethylene glycol are preferable in that they have a large effect of improving surface glossiness of a foamed molded product.

An amount of the water absorbing substance (d) to be added in the polyolefin-based resin particles in accordance with an embodiment of the present invention is not less than 0.01 parts by weight and not more than 1 part by weight, preferably not less than 0.05 parts by weight and not more than 0.7 parts by weight, and even more preferably not less than 0.1 parts by weight and not more than 0.6 parts by weight, with respect to 100 parts by weight of the polyolefin-based resin (a). In a case where the added amount is less than 0.01 parts by weight, the water absorbing substance (d) does not bring about an effect of improving the surface glossiness. In a case where the added amount exceeds 1 part by weight, the expanded particles tend to contract.

### 2-5. Other Components

The polyolefin-based resin particles preferably contain an expansion nucleating agent that may become expansion nuclei at the time of expansion.

Examples of the expansion nucleating agent to be used in an embodiment of the present invention include silica (silicon dioxide), silicate, alumina, diatomaceous earth, calcium carbonate, magnesium carbonate, calcium phosphate, feldspar apatite, and barium sulfate. Examples of silicate include talc, magnesium silicate, kaolin, halloysite, dickite, aluminum silicate, and zeolite. These expansion nucleating agents can be used alone or in combinations of two or more.

An amount of the expansion nucleating agent contained in the polyolefin-based resin particles in accordance with an embodiment of the present invention is preferably not less than 0.005 parts by weight and not more than 2 parts by weight, more preferably not less than 0.01 parts by weight and not more than 1 part by weight, and most preferably not less than 0.03 parts by weight and not more than 0.5 parts by weight, with respect to 100 parts by weight of the polyolefin-based resin (a), in terms of uniformity of cell diameter.

In an embodiment of the present invention, a coloring agent may be used to the extent that the coloring agent does not impair the effects of an embodiment of the present invention. More specifically, the polyolefin-based resin particles in accordance with an embodiment of the present invention may contain a coloring agent. Examples of the coloring agent for use in an embodiment of the present invention include carbon black, ultramarine blue, cyanine pigment, azo pigment, quinacridone pigment cadmium yellow, chrome oxide, iron oxide, perylene pigment, and anthraquinone pigment.

An amount of the coloring agent contained in the polyolefin-based resin particles in accordance with an embodiment of the present invention is preferably not less than 0.001 parts by weight and not more than 10 parts by weight, and more preferably not less than 0.01 parts by weight and not more than 8 parts by weight, with respect to 100 parts by weight of the polyolefin-based resin (a). Particularly in a case where blackening is achieved by use of carbon black, the amount of the coloring agent is preferably not less than 1 part by weight and not more than 10 parts by weight, with respect to 100 parts by weight of the polyolefin-based resin (a).

Other than the expansion nucleating agent and the coloring agent, the polyolefin-based resin particles may contain additives such as an anti-static agent, a flame retarder, an antioxidant, a photo stabilizer, a crystal nucleating agent, an electrically conductive agent, and/or a lubricant/slip additive. Such additives can be directly added to a blended product or to a polyolefin-based resin composition during production of the polyolefin-based resin particles. Alternatively, it is possible to (i) prepare a masterbatch in advance by adding, at a high concentration, the additive in another resin and then (ii) add the masterbatch resin to a blended product or to a polyolefin-based resin composition. The resin used in preparation of the masterbatch resin is preferably a polyolefin-based resin.

### 3. Method of Producing Polyolefin-Based Resin Expanded Particles and In-Mold Foamed Molded Product

During production of the polyolefin-based resin expanded particles in accordance with an embodiment of the present invention, it is possible to first carry out a step (granulation step) of producing polyolefin-based resin particles composed of polyolefin-based resin serving as a base material resin.

Examples of methods for producing the polyolefin-based resin particles include methods utilizing an extruder. As one specific example, the polyolefin-based resin particles can be prepared via a method involving the following steps (1) to (5): (1) preparing a blended product by blending together the polyolefin-based resin (a), the product (b), the butene copolymer polyethylene wax (c), the water absorbing substance (d), and as necessary, additive(s) (for example, another resin, an expansion nucleating agent, and/or a coloring agent); (2) introducing the blended product into an extruder and melting and kneading the blended product so as to prepare a polyolefin-based resin composition; (3) extruding the polyolefin-based resin composition from a die; (4) cooling the extruded polyolefin-based resin composition by, for example, passing it through water, so that the polyolefin-based resin composition solidifies; and (5) finely cutting the solidified polyolefin-based resin composition, with use of a cutter, into a desired shape such as a cylindrical shape, elliptical shape, spherical shape, cuboid shape, or rectangular parallelepiped shape. Alternatively, in step (3), the polyolefin-based resin composition which has been melted and kneaded may be extruded directly into water from the die, and immediately thereafter cut into particles, cooled, and solidified. Melting and kneading a blended product in this manner makes it possible to obtain polyolefin-based resin particles which are more uniform.

The polyolefin-based resin particles obtained in the above manner preferably have a particle weight of not less than 0.2 mg/particle and not more than 10 mg/particle, and more preferably not less than 0.5 mg/particle and not more than 5 mg/particle. In a case where the particle weight of the polyolefin-based resin particles is less than 0.2 mg/particle, there tends to be a decrease in the handleability of the polyolefin-based resin particles. In a case where the particle weight of the polyolefin-based resin particles exceeds 10 mg/particle, there tends to be a decrease in a mold-filling property during the process of in-mold foam molding.

Polyolefin-based resin particles obtained in the above manner can be used to produce polyolefin-based resin expanded particles in accordance with an embodiment of the present invention.

A method of producing polyolefin-based resin expanded particles in accordance with the present invention is **defined in claim 7.**

In the present specification, the phrase "method of producing polypropylene-based resin expanded particles in accordance with an embodiment of the present invention" may be expressed simply as "the present production method".

A more specific explanation of the present production method is as follows. (i) Placed into a pressure-resistant vessel are a dispersion slurry and an inorganic expanding agent, the dispersion slurry including the following at predetermined ratios: the polyolefin-based resin particles; an aqueous dispersion medium; a dispersing agent; and a dispersion auxiliary agent. (ii) The dispersion slurry is stirred so that the polyolefin-based resin particles in the dispersion slurry are dispersed in the pressure-resistant vessel. Along with this dispersion, the temperature and pressure inside the pressure-resistant vessel are raised to a predetermined temperature (not lower than a softening temperature of the polyolefin-based resin particles) and a predetermined pressure. (iii) Thereafter, as necessary, the pressure-resistant vessel is maintained at the predetermined temperature for a period of longer than 0 minutes and not more than 120 minutes. (iv) Thereafter, the dispersion slurry in the pressure-resistant vessel is expelled into an area having a pressure lower than the internal pressure of the pressure-resistant vessel, so that the polyolefin-based resin particles are expanded and the polypropylene-based resin expanded particles are produced.

Note that a process of producing polyolefin-based resin expanded particles from polyolefin-based resin particles in this manner is referred to here as a "first-step expansion process," and the polyolefin-based resin expanded particles thus obtained are referred to as "first-step expanded particles". Furthermore, in step (ii) and subsequent steps, the term "dispersion slurry" refers to a mixed slurry which: is in the pressure-resistant vessel; contains e.g. the polyolefin-based resin particles, the aqueous dispersion medium, the dispersing agent, the dispersion auxiliary agent, and the expanding agent; and in which mixed slurry ., the polyolefin-based resin particles, the aqueous dispersion medium, the dispersing agent, the dispersion auxiliary agent, and the expanding agent, are dispersed by stirring.

Note here that when raising the temperature in the pressure-resistant vessel to the softening temperature or higher, the temperature is preferably raised to a temperature which is not lower than 20°C below and not higher than 10°C above the melting point of the polyolefin-based resin, or not lower than 20°C below and not higher than 10°C above the melting point of the polyolefin-based resin particles, in order to ensure expandability of the expanded particles during the production of the expanded particles. Note, however, that the temperature to which the temperature is raised is decided as appropriate in accordance with (i) the type of polyolefin-based resin used as the base material and/or (ii) the desired expansion ratio of the polyolefin-based resin expanded particles, and further in accordance with, for example, the DSC ratio described later. The temperature to which the temperature is raised may also need to be changed depending on the expanding agent used.

Note that the melting point of the polyolefin-based resin particles is measured by a method similar to that for the polyolefin-based resin.

It is preferable that the area having a pressure lower than the internal pressure of the pressure-resistant vessel is at atmospheric pressure.

The aqueous dispersion medium used in an embodiment of the present invention is preferably only water. However, it is also possible to use a dispersion medium obtained by adding methanol, ethanol, ethylene glycol, and/or glycerin to water.

An amount of the aqueous dispersion medium used in the dispersion slurry for an embodiment of the present invention is preferably not less than 100 parts by weight and not more than 400 parts by weight, with respect to 100 parts by weight of the polyolefin-based resin. Using the aqueous dispersion medium in an amount exceeding 400 parts by weight leads to a decrease in productivity. Using the aqueous dispersion medium in an amount less than 100 parts by weight tends to cause a decrease in the stability of the dispersion slurry (in other words, there tends to be poor dispersion of the polyolefin-based resin expanded particles).

Examples of the dispersing agent which can be used in an embodiment of the present invention include inorganic dispersing agents such as tertiary calcium phosphate, tertiary magnesium phosphate, basic magnesium carbonate, calcium carbonate, barium sulfate, kaolin, talc, and clay. Each of these examples may be used alone, or in combinations of two or more.

In an embodiment of the present invention, it is preferable to further use a dispersion auxiliary agent in order to increase the stability of the dispersion slurry in the pressure-resistant vessel. Examples of the dispersion auxiliary agent include sodium dodecylbenzene sulfonate, sodium alkane sulfonates, sodium alkyl sulfonates, sodium alkyl diphenyl ether disulfonates, and sodium α-olefin sulfonates. Each of these examples may be used alone, or in combinations of two or more.

An amount of the dispersing agent used in the dispersion slurry for an embodiment of the present invention is preferably not less than 0.01 parts by weight and not more than 3.0 parts by weight, with respect to 100 parts by weight of the polyolefin-based resin. In a case where the used amount of the dispersing agent is less than 0.01 parts by weight, there tends to be poor dispersion. In a case where the used amount of the dispersing agent is 3.0 parts by weight or greater, there tends to be poor fusion between polyolefin-based resin expanded particles during in-mold foam molding.

An amount of the dispersion auxiliary agent used in the dispersion slurry for an embodiment of the present invention is preferably not less than 0.001 parts by weight and not more than 0.2 parts by weight, with respect to 100 parts by weight of the polyolefin-based resin. In a case where the used amount of the dispersion auxiliary agent is less than 0.001 parts by weight or more than 0.2 parts by weight, there may be poor dispersion.

A decrease in the stability of the dispersion slurry may result in a plurality of polyolefin-based resin particles agglomerating or forming lumps in the pressure-resistant vessel. This may result in, for example, (a) the production of agglomerated polyolefin-based resin expanded particles, (b) an inability to produce polyolefin-based resin expanded particles due to lumps of the polyolefin-based resin particles remaining in the pressure-resistant vessel, or (c) a decrease in productivity during production of polyolefin-based resin expanded particles.

In an embodiment of the present invention, the expanding agent used is an inorganic expanding agent. Examples of the inorganic expanding agent include water, carbon dioxide, nitrogen, and air (a mixture of oxygen, nitrogen, and carbon dioxide). Each of these examples may be used alone, or in combinations of two or more. Out of these expanding agents, carbon dioxide is preferable in that it has an appropriately high plasticizing effect and makes it easy to improve the expandability of the expanded particles during production of the expanded particles.

In an embodiment of the present invention, the used amount of the expanding agent is not limited, and may be adjusted as appropriate in accordance with the desired expansion ratio of the polyolefin-based resin expanded particles. The amount of the expanding agent used is preferably not less than 1 part by weight and not more than 10 parts by weight, with respect to 100 parts by weight of the polyolefin-based resin.

In a case where water is used as the expanding agent, water in the dispersion slurry in the pressure-resistant vessel can be used as the expanding agent. Specifically, in a case where the water in the dispersion slurry is to be used as the expanding agent, it is preferable for the polyolefin-based resin particles to contain a water absorbing substance in advance. This allows the polyolefin-based resin particles to more easily absorb the water in the dispersion slurry in the pressure-resistant vessel. As a result, it becomes easier to use the water as the expanding agent.

The pressure-resistant vessel used during production of the polyolefin-based resin expanded particles is not limited to a particular vessel, and need only be a vessel which can withstand the internal pressure and temperatures which the pressure-resistant vessel is subjected to during production of the polyolefin-based resin expanded particles. Possible examples of the pressure-resistant vessel include an autoclave-type pressure-resistant vessel.

In order to obtain polyolefin-based resin expanded particles having a high expansion ratio, it is possible to use a method in which a large amount of the expanding agent is used during the first-step expansion process (this method is hereinafter referred to as "Method 1"). Examples of methods other than the Method 1 which can be used include a method in which polyolefin-based resin expanded particles (first-step expanded particles) having a relatively low expansion ratio (an expansion ratio of approximately 2 to 35 times) are obtained in the first-step expansion process, and thereafter, the polyolefin-based resin expanded particles are expanded again to increase the expansion ratio (this method is hereinafter referred to as "Method 2"). In the present specification, "expansion ratio" refers to an absolute expansion ratio which can be calculated from (i) a density of the polyolefin-based resin composition before expansion, (ii) a weight of the polyolefin-based resin expanded particles, and (iii) a volume of the polyolefin-based resin expanded particles found by submerging the polyolefin-based resin expanded particles in water (or in ethanol).

Examples of Method 2 encompass a method including the following steps (i) to (iii). (i) In a first-step expansion process, first-step expanded particles having an expansion ratio of 2 to 35 times are produced. (ii) The first-step expanded particles are placed into a pressure-resistant vessel, and the pressure inside the first-step expanded particles (hereinafter, also referred to as "internal pressure") is increased to greater than normal pressure by carrying out a pressure treatment at not less than 0.1 MPa (gage pressure) and not more than 0.6 MPa (gage pressure) with use of e.g. nitrogen, air, or carbon dioxide. (iii) Thereafter, the first-step expanded particles are further expanded by heating the particles with use of, for example, steam. Note that a step of increasing the expansion ratio of first-step expanded particles as in Method 2 is referred to here as a "second-step expansion process", and the polyolefin-based resin expanded particles obtained via the Method 2 are referred to as "second-step expanded particles".

In an embodiment of the present invention, the pressure of the steam in the second-step expansion process is preferably adjusted to a range of not less than 0.03 MPa (gage pressure) and not more than 0.20 MPa (gage pressure), in accordance with the expansion ratio of the second-step expanded particles.

In a case where the pressure of the steam in the second-step expansion process is less than 0.03 MPa (gage pressure), there tends to be difficulty in improving the expansion ratio. In a case where the pressure of the steam in the second-step expansion process exceeds 0.20 MPa (gage pressure), there is a tendency for the obtained second-step expanded particles to agglomerate, which tends to make it impossible to subsequently subject the second-step expanded particles to in-mold foam molding.

It is desirable to adjust as appropriate the internal pressure e.g., the nitrogen, air, or carbon dioxide impregnated in the first-step expanded particles, in consideration of the expansion ratio of the second-step expanded particles and the steam pressure of the second-step expansion process. The internal pressure of e.g., the nitrogen, air, or carbon dioxide impregnated in the first-step expanded particles is preferably not less than 0.2 MPa (absolute pressure) and not more than 0.6 MPa (absolute pressure).

In a case where the internal pressure of e.g., the nitrogen, air, or carbon dioxide impregnated in the first-step expanded particles is less than 0.2 MPa (absolute pressure), in order to improve the expansion ratio it becomes necessary to use steam having a high pressure. As a result, the second-step expanded particles tend to agglomerate. In a case where the internal pressure of the e.g., nitrogen, air or carbon dioxide impregnated in the first-step expanded particles exceeds 0.6 MPa (absolute pressure), the second-step expanded particles tend to become an open-cell foam. As a result, there tends to be a decrease in the rigidity (such as compressive strength) of the in-mold foamed molded product which is ultimately obtained. Note that an open-cell foam can also be described as having cells in communication with each other.

The polyolefin-based resin expanded particles in accordance with an embodiment of the present invention preferably have a shape which is spherical or substantially spherical, in consideration of the ability of the polyolefin-based resin expanded particles to fill a mold when used in in-mold foam molding. Note, however, that the shape of the polyolefin-based resin expanded particles is not limited to being spherical or substantially spherical. For example, there are cases in which a polyolefin-based resin in-mold foamed molded product is intentionally produced in a manner so as to have gaps therein, in order to impart permeability and/or sound absorbency to the polyolefin-based resin in-mold foamed molded product. In such cases, it is possible to utilize polyolefin-based resin expanded particles having a cylindrical shape, elliptical shape, rectangular parallelepiped shape, or a tube shape (straw shape).

In a case where the polyolefin-based resin expanded particles in accordance with an embodiment of the present invention have a spherical or substantially spherical shape, an average diameter (also called average particle diameter) of the polyolefin-based resin expanded particles is not particularly limited. The average diameter of the polyolefin-based resin expanded particles in accordance with an embodiment of the present invention may change depending on for example, (i) the size of the polyolefin-based resin particles prior to expansion and (ii) the expansion ratio, but is preferably not less than 0.5 mm and not more than 10 mm, more preferably not less than 1 mm and not more than 7 mm, and even more preferably not less than 2 mm and not more than 5 mm. Here, the average diameter of the polyolefin-based resin expanded particles refers to the arithmetic mean value of measured diameters of 20 arbitrarily selected polyolefin-based resin expanded particles

In a case where the average diameter of the polyolefin-based resin expanded particles in accordance with an embodiment of the present invention is less than 0.5 mm, there tends to be a decrease in workability during in-mold foam molding using the polyolefin-based resin expanded particles. In a case where the average diameter exceeds 10 mm, there tend to be limitations to the shape of the polyolefin-based resin in-mold foamed molded product during in-mold foam molding using the polyolefin-based resin expanded particles. Here, limitations to the shape of the molded product refers to, for example, cases where it becomes impossible to produce a polyolefin-based resin in-mold foamed molded product having thin portions.

The polyolefin-based resin expanded particles in accordance with an embodiment of the present invention have an average weight which is approximately the same as that of the polyolefin-based resin particles used to produce the polyolefin-based resin expanded particles. The average weight of the polyolefin-based resin expanded particles is preferably not less than 0.1 mg/particle and not more than 100 mg/particle, and more preferably not less than 0.3 mg/particle and not more than 10 mg/particle. Here, the average weight of the polyolefin-based resin expanded particles refers to the arithmetic mean value of measured weights of 10 arbitrarily selected polyolefin-based resin expanded particles

An expansion ratio of the polyolefin-based resin expanded particles in accordance with an embodiment of the present invention is preferably not less than 2 times and not more than 60 times, and more preferably not less than 3 times and not more than 40 times.

In a DSC curve obtained by measuring the quantity of heat of polyolefin-based resin expanded particles via DSC, the polyolefin-based resin expanded particles in accordance with an embodiment of the present invention preferably have two or more melting peaks, as illustrated in Fig. 1. Such polyolefin-based resin expanded particles having two or more melting peaks can be produced via a known method.

Note that the DSC curve of the polyolefin-based resin expanded particles refers to a curve obtained via DSC in which 5 mg to 6 mg of the polyolefin-based resin expanded particles at a temperature of 40°C are heated to 220°C at a temperature increase rate of 10°C/minute. One example of such a DSC curve is the DSC curve of Example 1 (described later) as shown in Fig. 1. As illustrated in Fig. 1, there may be endothermic peaks derived from the higher fatty acid amide in the product (b) and the butene copolymer polyethylene wax (c), in accordance with the amounts of the product (b) and the butene copolymer polyethylene wax (c) added in an embodiment of the present invention. In Fig. 1, small endothermic peaks derived from the higher fatty acid amide and the butene copolymer polyethylene wax are observed at around 79°C and 102°C, respectively.

The polyolefin-based resin expanded particles in an embodiment of the present invention have an average cell diameter which is preferably not less than 80 µm and not more than 500 µm, more preferably not less than 90 pm and not more than 400 µm, and even more preferably not less than 100 µm and not more than 350 µm. In a case where the polyolefin-based resin expanded particles have an average cell diameter of less than 80 µm, there tends to be a decrease in the compressive strength of the polyolefin-based resin in-mold foamed molded product. In a case where the polyolefin-based resin expanded particles have an average cell diameter exceeding 500 pm, the mold cycle of the polyolefin-based resin in-mold foamed molded product tends to become longer and thus there is a tendency for productivity to decrease. Here, the mold cycle refers to period from when in-mold foam molding commences to when the molding ends and the molded product that is obtained is ejected from the mold, which period occurs when in-mold foam molding is carried out using the polyolefin-based resin expanded particles so as to obtain a polyolefin-based resin in-mold molded product.

The polyolefin-based resin in-mold foamed molded product in accordance with an embodiment of the present invention is produced by a typical method in which the polyolefin-based resin expanded particles are subjected to in-mold foam molding.

Examples of methods for filling the polyolefin-based resin expanded particles into a form such as a mold when the polyolefin-based resin expanded particles are used in in-mold foam molding include the following mold-filling methods (A) to (C):
(A) A method in which filling is carried out with polyolefin-based resin expanded particles that have been imparted in advance with the ability to expand by impregnating an inorganic gas such as nitrogen, air, or carbon dioxide into the polyolefin-based resin expanded particles (i.e., giving internal pressure to the particles).
(B) A method in which filling is carried out with polyolefin-based resin expanded particles that have not been given internal pressure (i.e., in which the internal pressure is left approximately the same as atmospheric pressure).
(C) A method in which the polyolefin-based resin expanded particles for filling are compressed by e.g. a carrying gas (which may be nitrogen or carbon dioxide) when being filled into the mold, so that the internal pressure of the polyolefin-based resin expanded particles is increased simultaneously with filling. These methods may also be used in combination, and it is possible to use conventionally known mold-filling methods other than these methods.

In an embodiment of the present invention, examples of methods for producing the polyolefin-based resin in-mold foamed molded product from the polyolefin-based resin expanded particles encompass a method including the following steps (i) through (iv). (i) Filling the polyolefin-based resin expanded particles into a mold in a state where the mold is somewhat open, the mold being closeable but not scalable. (ii) Fusing the polyolefin-based resin expanded particles together by heating the polyolefin-based resin expanded particles with use of a heating medium such as steam having a heating steam pressure of approximately 0.05 MPa (gage pressure) to approximately 0.5 MPa (gage pressure), for a period of approximately 3 seconds to approximately 30 seconds. (iii) Subsequently water-cooling the mold to a degree that allows reduced deformation of the polyolefin-based resin in-mold foamed molded product after the in-mold foamed molded product is removed from the mold. (iv) Opening the mold, and removing therefrom the polyolefin-based resin in-mold foamed molded product. Note that in step (i), the width to which the mold is opened prior to filling the polyolefin-based resin expanded particles may be referred to as a mold gap.

The polyolefin-based resin in-mold foamed molded product obtained in this manner can be used suitably for a variety of applications, such as shock-absorbing packing materials, shipping materials, thermal insulating materials, civil engineering and construction materials, and automotive components.

A method of producing polyolefin-based resin expanded particles in accordance with an embodiment of the present invention may be a method of producing polyolefin-based resin expanded particles including: dispersing polyolefin-based resin particles and an expanding agent in a aqueous dispersion medium inside a pressure-resistant vessel; pressurizing and heating the inside of the pressure-resistant vessel to a temperature not less than a softening temperature of the polyolefin-based resin particles; subsequently expelling the aqueous dispersion medium in which the polyolefin-based resin particles and the expanding agent are dispersed to an area having pressure which is lower than an internal pressure of the pressure-resistant vessel so as to obtain the polyolefin-based resin expanded particles, the polyolefin-based resin expanded particles including: 100 parts by weight of a polyolefin-based resin (a); not less than 3 parts by weight and not more than 10 parts by weight of a product (b) containing: an olefin-based elastomer (Component 1); a copolymer (Component 2) which differs from the Component 1 and is a copolymer of ethylene and at least one type of vinyl monomer; and a higher fatty acid amide (Component 3); not less than 2 parts by weight and not more than 10 parts by weight of a butene copolymer polyethylene wax (c); and not less than 0.01 parts by weight and not more than 1 part by weight of a water absorbing substance (d), the expanding agent being an inorganic expanding agent.

### Examples

The following description will discuss an embodiment of the present invention with reference to Examples and Comparative Examples. Note that the present invention is not limited to these Examples.

Polyolefin-based resin and additives used in the Examples and Comparative Examples are as follows.

### (1) Polyolefin-based resin (a)

· Polypropylene-based resin A: butene-ethylene-propylene based random copolymer; melting point of 149°C; density of 0.90 g/cm3, 1-butene content of 3.8 wt%; ethylene content of 0.5 wt%; MI of 10.0 g/10 minutes
Polyethylene-based resin B: linear low-density polyethylene; melting point of 123°C; density of 0.92 g/cm3, MI of 2.1 g/10 minutes

### (2) Olefin-based elastomer (Component 1 in an embodiment of the present invention)

· Ethylene propylene copolymer rubber [EP07P, manufactured by JSR Corporation]
Ethylene octene copolymer rubber [ENGAGE 8100, manufactured by Dow Chemical Japan Ltd.]
Graft polymer A [polymer in which methyl methacrylate, methacrylic acid, and butyl acrylate are graft-polymerized with ethylene octene copolymer rubber]
· Graft polymer B [polymer in which styrene, butyl acrylate, and 2-hydroxypropyl methacrylate are graft-polymerized with ethylene propylene copolymer rubber]

### (3) Copolymer of ethylene and at least one type of vinyl monomer (Component 2 in an embodiment of the present invention)

·Ethylene ethyl acrylate copolymer [DPDJ-6169, manufactured by NUC Co., Ltd.]
· Ethylene methyl methacrylate copolymer [Acryft WH401, manufactured by Sumitomo Chemical Co., Ltd.]

### (4) Higher fatty acid amide (Component 3 in an embodiment of the present invention)

· Erucic acid amide [Alflow P-10, manufactured by Nichiyu Corporation]
·Oleic acid amide [Alflow E-10, manufactured by Nichiyu Corporation]

### (5) Butene copolymer polyethylene wax (c)

· Polyethylene wax A [manufactured by Mitsui Chemicals, Inc.]: butene copolymer polyethylene wax; butene content of 7.5 weight%; viscosity average molecular weight of 2900; melting point of 102°C
·Polyethylene wax B [manufactured by Mitsui Chemicals, Inc.]: butene copolymer polyethylene wax; butene content of 8.5 weight%; viscosity average molecular weight of 2700; melting point of 91°C]

### (6) Water absorbing substance (d)

·Glycerin [Purified Glycerin D, manufactured by Lion Corporation]
·Polyethylene glycol [PEG #300, manufactured by Lion Corporation]

### (7) Other additives

· Talc [Talcan Powder PK-S, manufactured by Hayashi-Kasei Co., Ltd.]
·Carbon black [MCF88, manufactured by Mitsubishi Chemical Corporation]

### (8) Dispersing agent

· Kaolin [ASP-170, manufactured by BASF]

### (9) Dispersion auxiliary agent

·Sodium dodecylbenzenesulfonate [Neopelex G-15, manufactured by Kao Corporation]

### (10) Expanding agent

· Carbon dioxide [manufactured by Air Water Inc.]

### (11) Silicon-based composition A

A silicon-based composition A was prepared via a method involving the below steps (1) to (5) in order, with use of a twin-screw extruder [TEK45, manufactured by O. N. Machinery Co., Ltd.]. Settings for the twin-screw extruder were as follows: temperature of barrels (C1 to C9, H/D) was set to 80°C to 200°C (C1 = 80°C, C2 = 150°C, C3 = 160°C, C4 = 180°C, C5 to C9 = 200°C, H/D = 200°C); screw rotation speed was set to 200 rpm.
(1) First, 75 parts by weight of a polypropylene-based resin [Prime Polypro J-105G (homoPP, manufactured by Prime Polymer Co., Ltd., MFR = 9 g/10 minutes)], 25 parts by weight of a polypropylene wax [Biscol 330-P (manufactured by Sanyo Chemical Industries, Ltd., molecular weight: 15000)], and 0.8 parts by weight of an organic peroxide [2,5-dimethyl-2,5-di-(t-butylperoxy) hexane) (product name: LUPEROX 101; manufactured by Arkema Yoshitomi, Ltd.)] were fed into the twin-screw extruder through a material feed opening.
(2) Next, 100 parts by weight of a polydimethylsiloxane with both ends terminated with dimethylvinylsiloxane [product name: XF40A-1987; manufactured by Momentive Performance Materials Japan LLC] was fed into the twin-screw extruder through the barrel C3 with the use of a liquid adding machine.
(3) Thereafter, the materials in the twin-screw extruder were melted and kneaded to obtain Sample A.
(4) Next, 200.8 parts by weight of Sample A was fed into the twin-screw extruder through the material feed opening, and 50 parts by weight of a polydimethylsiloxane [Product name: TSF451-50; manufactured by Momentive Performance Materials Japan LLC] was fed into the two-screw extruder through the barrel C3 with the use of a liquid adding machine.
(5) Thereafter, the materials in the twin-screw extruder were melted and kneaded to obtain the silicon-based composition A.

Note that the polydimethylsiloxane with both ends terminated with dimethylvinylsiloxane described in step (2) was a polyorganosiloxane containing at least one silicon-atom-bound radical polymerizable functional group per molecule. The polydimethylsiloxane described in step (4) was a non-radical polymerizable polyorganosiloxane.

The Examples and Comparative Examples were evaluated as follows.

Expansion Ratio of Polyolefin-Based Resin Expanded Particles (First-Step Expanded Particles and Second-Step Expanded Particles)

A weight w (g) of approximately 50 cm³ (bulk volume) of polyolefin-based resin expanded particles was determined. A volume v (cm³) of the polyolefin-based resin expanded particles was determined by submerging the polyolefin-based resin expanded particles in ethanol. The expansion ratio of the polyolefin-based resin expanded particles was the determined from the weight w (g) and the volume v (cm³) thus determined, and from the density d (g/cm³) of the polyolefin-based resin (a), using the following formula: 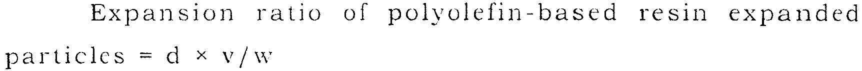 Expansion ratio of polyolefin-based resin expanded particles = d × v/w

Apparent Density of Polyolefin-Based Resin Expanded Particles (First-Step Expanded Particles and Second-Step Expanded Particles)

Polyolefin-based resin expanded particles were introduced gently into a 10 L container having a wide mouth, until the container was overflowing. Thereafter, the opening of the 10 L container was scraped so as to obtain 10 L of the polyolefin-based resin expanded particles. The weight of the polyolefin-based resin expanded particles in the 10 L container was measured. An apparent density was determined by dividing the weight by the volume of 10 L. The unit used for the apparent density was g/L.

### Density of Polyolefin-Based Resin In-Mold Foamed Molded Product

A length, width, and thickness of a polyolefin-based resin in-mold foamed molded product (thickness: 50 mm) that was produced were measured with calipers. From these measurements, a volume V (cm³) of the polyolefin-based resin in-mold foamed molded product was calculated. Thereafter, a weight W (g) of the polyolefin-based resin in-mold foamed molded product (thickness: 50 mm) was measured. The weight was divided by the volume V (cm³) so as to obtain a density of the polyolefin-based resin in-mold foamed molded product. The unit used for the volume of the polyolefin-based resin in-mold foamed molded product was g/L.

### Evaluation of Surface Glossiness of In-Mold Foamed Molded Product

Light from a straight-tube fluorescent lamp (FLR40SD/M/36-B, manufactured by Hitachi, Ltd.) was shone onto a 300 mm (width) × 400 mm (length) surface of a polyolefin-based resin in-mold foamed molded product that was produced, from a distance of 1.5 m above the surface and from a direction perpendicular to the surface. The surface of the polyolefin-based resin in-mold foamed molded product thus illuminated was visually inspected from an angle of 45° above the surface, and the surface glossiness was evaluated.
Excellent (E): Not less than 70% of the entire surface exhibits glossiness
Good (G): Not less than 30% to less than 70% of the entire surface exhibits glossiness
Poor (P): Less than 30% of the entire surface exhibits glossiness, or entire surface exhibits no glossiness

### Evaluation of Frictional Noise of In-Mold Foamed Molded Product

Two test pieces (a test piece (A) and a test piece (B)) were cut out from a polyolefin-based resin in-mold foamed molded product that was produced. The test piece (A) had a size of 120 mm (length) × 60 mm (width) × 10 mm (thickness). The test piece (B) had a size of 50 mm (length) × 50 mm (width) × 10 mm (thickness). The test piece (A) and the test piece (B) each had a skin layer on one side thereof. The term "skin layer" refers to a portion of the surface of the test piece, specifically, a portion which formed a portion of the surface of the foamed molded product from which the test piece was taken. In other words, each test piece was cut out so that a portion of the surface of the foamed molded product from which the test piece was cut out is also a portion of the surface of the test piece itself. In a surface property tester (HEIDON Type 14, manufactured Shinto Scientific Co., Ltd.), the test pieces were set in a manner such that the test piece (B) was above the test piece (A), and the skin layers of the test pieces were in contact with each other. Furthermore, a weight of 1.0 kg was placed on the test piece (B) so as to put a load on the test piece (B), and the weight was left to stand still in this state for 60 seconds. After 60 seconds, the test piece (A) was moved 10 mm back and forth at a rate of 3,000 mm/minute, so that the two test pieces were rubbed against each other. A microphone was used to pick up frictional noise. The microphone was placed 10 cm away from where the test pieces were rubbed together. The sound thus picked up was analyzed for frequency and sound pressure level with the use of a realtime analyzer DSSF3 Light, manufactured by Yoshimasa Electronic Inc. An average sound pressure level (sound A) at a frequency of 8000 Hz was determined, and an average sound pressure level (sound B) at a frequency of 8000 Hz while the tester was operated without rubbing the test pieces together was also determined. The formula below was then used to determine a frictional sound pressure. The frictional sound pressure at a point 300 seconds after commencement of rubbing was considered to be a short term frictional sound pressure. The frictional sound pressure at a point 900 seconds after commencement of the rubbing was considered to be a long term frictional sound pressure. $Frictional sound pressure \left(dB\right) = sound A \left(dB\right) - sound B \left(dB\right)$ (formula)

### Stick-Slip Test of In-Mold Foamed Molded Product: Evaluation of Noise Occurrence Risk Index

Two test pieces (a test piece (C) and a test piece (D)) were cut out from a polyolefin-based resin in-mold foamed molded product that was produced. The test piece (C) had a size of 60 mm (length) × 60 mm (width) × 5 mm (thickness). The test piece (D) had a size of 50 mm (length) × 25 mm (width) × 5 mm (thickness). The test piece (C) and the test piece (D) each had a skin layer on one side thereof.

In a testing apparatus (SSP-04, manufactured by Ziegler-Instruments GmbH) in conformance with the standard VDA 230-206 of the German Association of the Automotive Industry, the test piece (C) and the test piece (D) were set such that the skin layers of the test pieces were in contact with each other. The noise occurrence risk index (RPN) was determined by carrying out the test with the following conditions: pressing force of 40 N between the test pieces; rubbing motion speed of 1mm/s between the test pieces; and an amplitude of 20 mm. The noise occurrence risk index obtained in the first measurement was considered to be a short-term noise occurrence risk index. The noise occurrence risk index obtained in the 15th measurement was considered to be the noise occurrence risk index. According to VDA 230-206, the RPN is evaluated as follows.
RPN of 1 points to 3 points: No noise occurrence risk.
RPN of 4 points to 5 points: Moderate noise occurrence risk.
RPN of 6 points to 10 points: High noise occurrence risk.

### Examples 1 to 16, Comparative Examples 1 to 13

### Preparation of Polyolefin-Based Resin Particles

A blended product was prepared by mixing the polyolefin-based resin (a), the product (b), the butene copolymer polyethylene wax (c), the water absorbing substance (d) of the types and parts by weight indicated in Tables 1 and 2, along with 0.05 parts by weight of talc, and as necessary, carbon black or silicon-based composition A. The blended product was melted and kneaded (resin temperature of 210°C) with use of an extruder (ø 50 mm), so that a polyolefin-based resin composition was obtained. The polyolefin-based resin composition was extruded in strands from the tip of the extruder and then granulated by cutting, so as to produce polyolefin-based resin particles (1.2 mg/particle).

### Preparation of Polyolefin-Based Resin Expanded Particles (First-Step Expanded Particles)

Into a 10 L pressure-resistant vessel, the following were introduced so as to prepare a dispersion slurry including an expanding agent: 100 parts by weight of the polyolefin-based resin particles obtained; 200 parts by weight of water as an aqueous dispersion medium; 0.3 parts by weight of kaolin as a dispersing agent; 0.004 parts by weight of sodium dodecylbenzenesulfonate as an dispersion auxiliary agent; and 2.6 parts by weight of carbon dioxide as an expanding agent. While the dispersion slurry was stirred, an expansion temperature (temperature inside the pressure-resistant vessel) was brought to 147°C to 149°C (for Examples 1 to 15 and Comparative Examples 1 to 16) or 123.5°C (for Example 16), and an expansion pressure (internal pressure of the vessel) was brought to 3.2 MPa (for all Examples and Comparative Examples). Once the temperature and the pressure inside the pressure-resistant vessel reached the predetermined expansion temperature and predetermined expansion pressure, the pressure and temperature inside the pressure-resistant vessel were maintained at the predetermined expansion temperature and predetermined expansion pressure for 30 minutes. Thereafter, carbon dioxide was supplied so that, while maintaining the predetermined expansion pressure in the pressure-resistant vessel, the dispersion slurry was expelled into an area of atmospheric pressure via an orifice (diameter: ø 3 mm) provided in a lower portion of the pressure-resistant vessel. This produced first-step expanded particles of the polyolefin-based resin. Thereafter, the first-step expanded particles of the polyolefin-based resin were dried at 75°C for 24 hours.

### Preparation of Polyolefin-Based Resin Expanded Particles (Second-Step Expanded Particles)

For each of Examples 1 to 16 and Comparative Examples 1 to 16, second-step expanded particles of a polyolefin-based resin were obtained via a method including the following steps (1) to (4) in the following order. (1) The first-step expanded particles obtained were supplied to a 1 m³ pressure-resistant vessel. (2) Air pressurization was used to impart an internal pressure of 0.20 MPa to 0.30 MPa (absolute pressure) the first-step expanded particles thus supplied. (3) Next, the particles were transferred to a second-step expansion device. (4) Thereafter, the first-step expanded particles were heated and further expanded with steam at 0.035 MPa to 0.060 MPa (gage pressure) so as to obtain second-step expanded particles which were substantially spherical.

In each of the Examples and Comparative Examples, the second-step expanded particles thus obtained exhibited two peaks derived from the polyolefin-based resin (a) in a DSC curve obtained by DSC measurements. In each of the Examples and Comparative Examples, the second-step expanded particles had an average cell diameter of 100 µm to 120 µm.

### Preparation of Polyolefin-Based Resin In-Mold Foamed Molded Product

For each of Examples 1 to 15 and Comparative Examples 1 to 16, a polyolefin-based resin in-mold foamed molded product was prepared via a method including the following steps (1) to (4) in the following order. (1) The second-step expanded particles obtained were imparted with internal pressure and then filled into a mold measuring 400 mm (length) × 300 mm (width) × 50 mm (thickness). Used as a filling method was the above-described method (A), and a mold gap of 5 mm was employed. (2) After filling, the second-step expanded particles were heated with steam at 0.32 MPa (gage pressure). (3) A polyolefin-based resin in-mold foamed molded product was obtained by the heat causing the second-step expanded particles to fuse together. (4) The polyolefin-based resin in-mold foamed molded product was removed from the mold.

For Example 16 a polyolefin-based resin in-mold foamed molded product was prepared via a method including the following steps (1) to (4) in the following order. (1) The second-step expanded particles obtained were filled into a mold measuring 400 mm (length) × 300 mm (width) × 50 mm (thickness), without imparting internal pressure to the particles. Used as a filling method was the above-described method (A), and a mold gap of 5 mm was employed. (2) After filling, the second-step expanded particles were heated with steam at 0.10 MPa (gage pressure). (3) A polyolefin-based resin in-mold foamed molded product was obtained by the heat causing the second-step expanded particles to fuse together. (4) The polyolefin-based resin in-mold foamed molded product was removed from the mold.

Table 1 indicates the types of materials used and amounts (used amounts) thereof in Examples 1 to 16, as well as the results of various evaluations. Table 2 indicates the types of materials used and amounts (used amounts) thereof in Comparative Example 1 to 16, as well as the results of various evaluations.

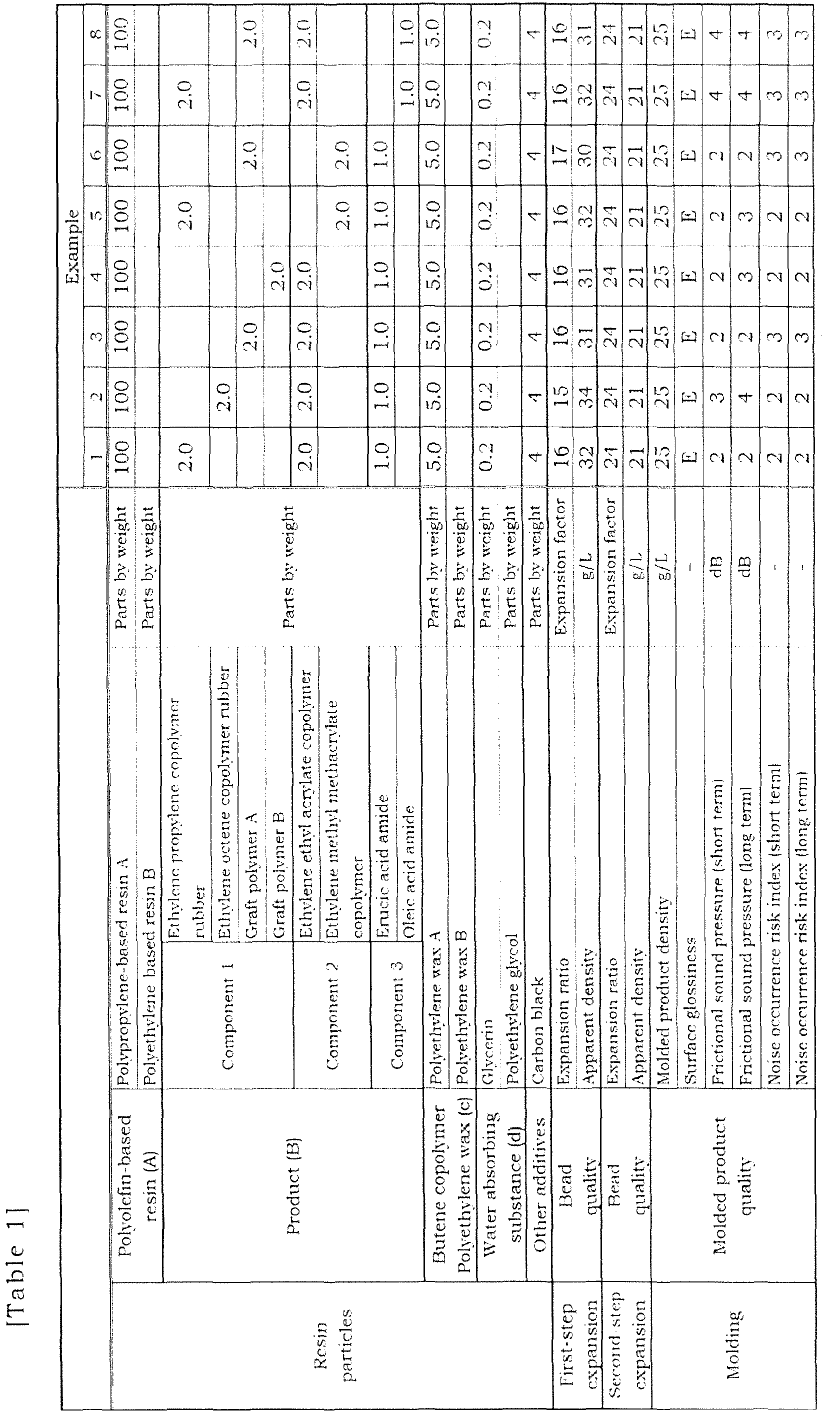

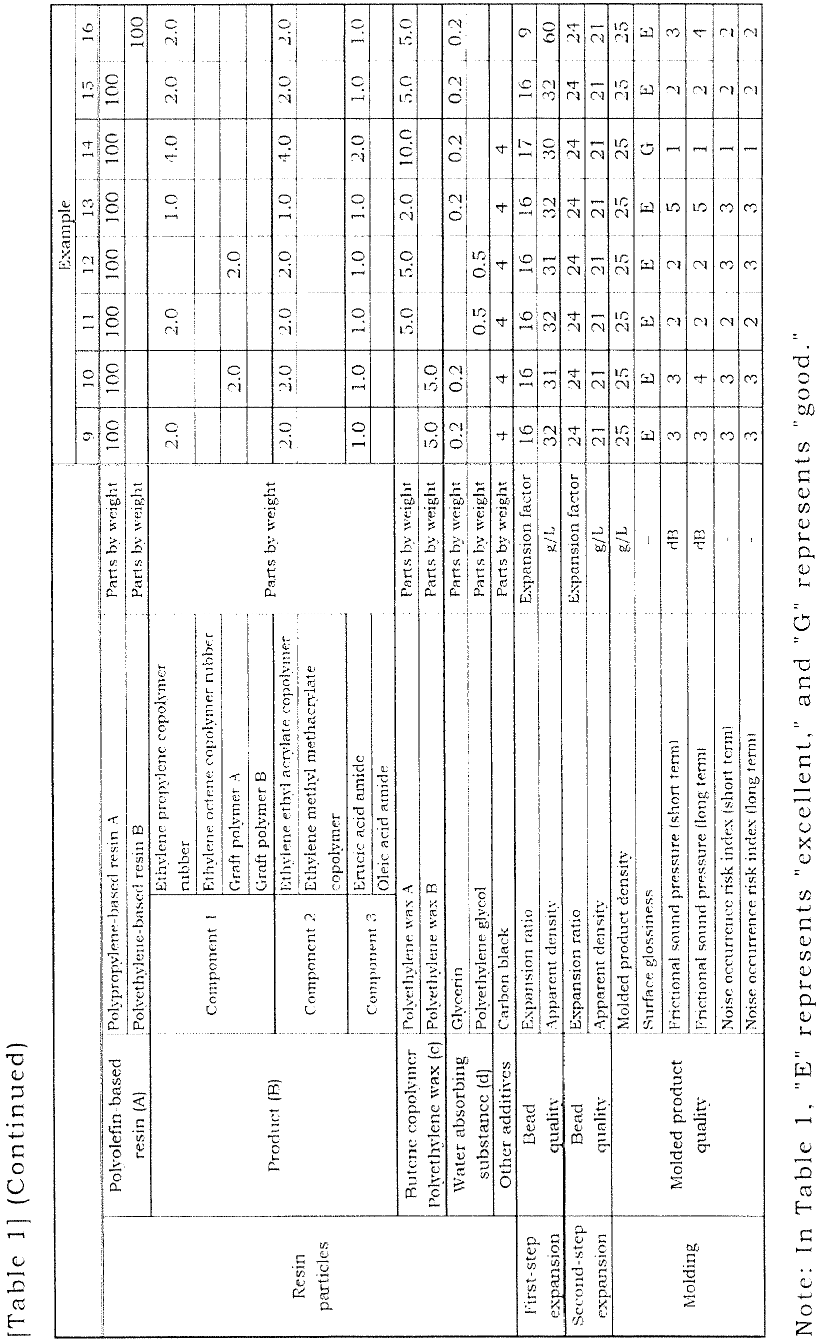

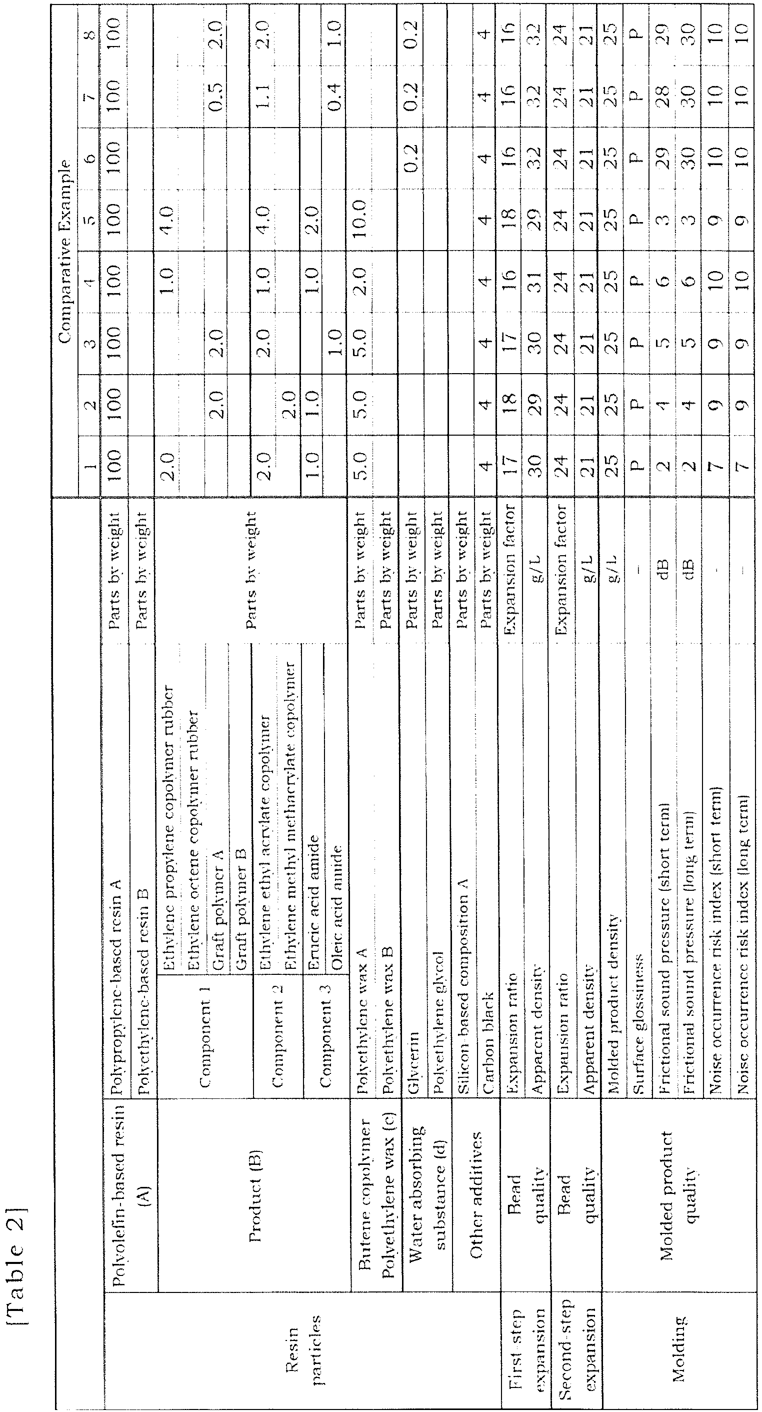

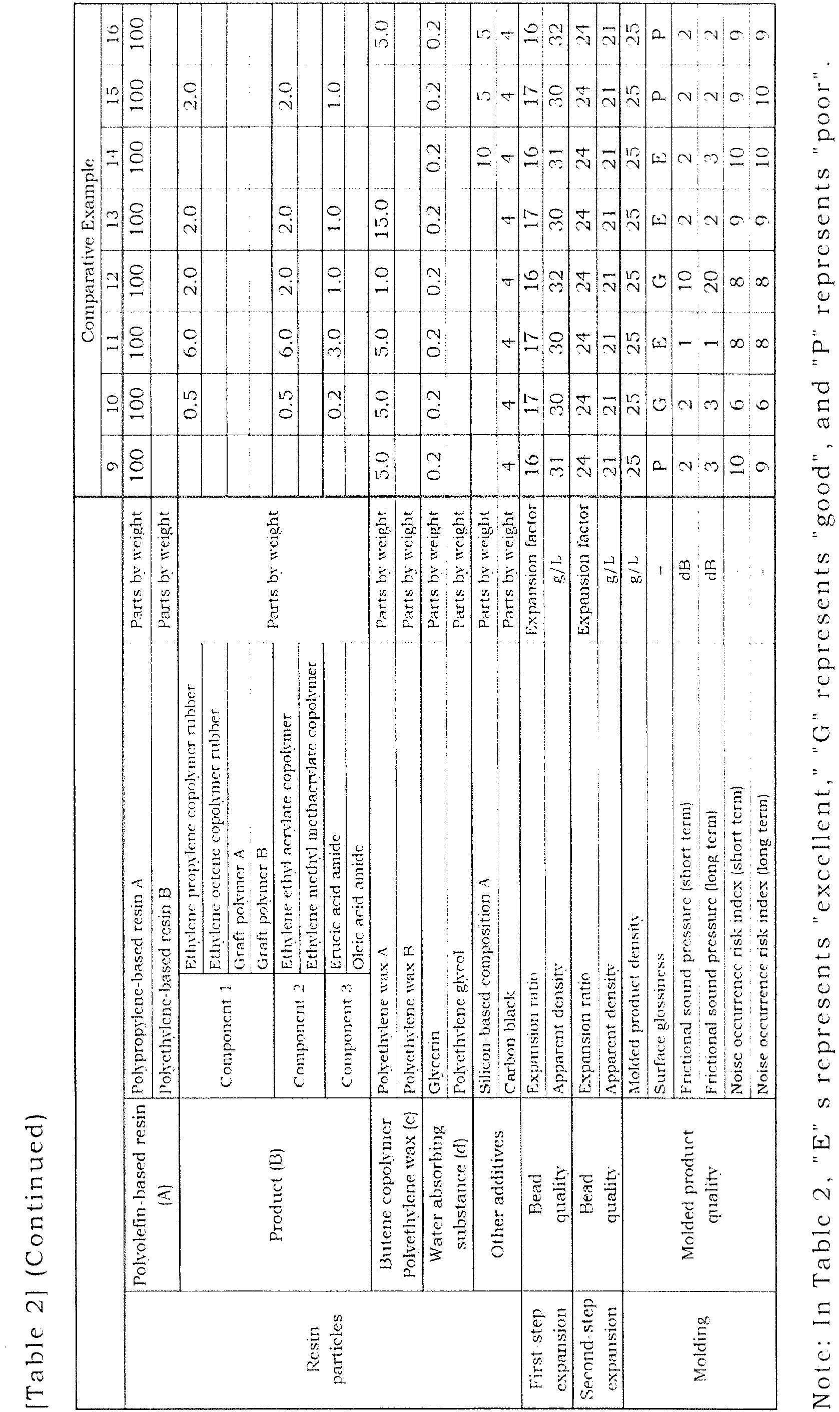

From Examples 1 to 16, it can be seen that an in-mold foamed molded product which has excellent surface glossiness, brings about a long-term effect of reduced frictional sound pressure, and brings about the effect of maintaining a noise occurrence risk index of 1 points to 3 points (no noise occurrence risk) in the long term was obtained from expanded particles which include, in accordance with the scope of the present invention, the following substances at predetermined ratios: the polyolefin-based resin (a); the product (b) which includes the olefin-based elastomer (Component 1), a copolymer (Component 2) which differs from Component 1 and is a copolymer of ethylene and at least one type of vinyl monomer, and the higher fatty acid amide (Component 3); the butene copolymer polyethylene wax (c); and the water absorbing substance (d).

From Comparative Examples 1 to 5, it can be seen that not adding the water absorbing substance (d) results in insufficient performance, with poor surface glossiness and a noise occurrence risk index in a range of 7 points to 10 points (high noise occurrence risk).

From Comparative Example 6, it can be seen that not adding the product (b) and the butene copolymer polyethylene wax (c) results in insufficient performance, with poor surface glossiness, high frictional sound pressure, and a noise occurrence risk index of 10 points (high noise occurrence risk).

In Comparative Examples 7 and 8, replications of Patent Literature 1 were carried out. It can be seen that this resulted in poor surface glossiness. Furthermore, it can be seen that not adding the butene copolymer polyethylene wax (c) resulted in insufficient performance, with high frictional sound pressure that was nearly identical to the results of Comparative Example 6, as well as a noise occurrence risk index of 10 points (high noise occurrence risk).

From Comparative Example 9, it can be seen that not adding the product (b) results in insufficient performance, with poor surface glossiness and a noise occurrence risk index of 9 points to 10 points (high noise occurrence risk).

From Comparative Example 10, it can be seen that an amount of the product (b) which falls below the range specified for an embodiment of the present invention results in insufficient performance, with a noise occurrence risk index of 6 points (high noise occurrence risk).

From Comparative Example 11, it can be seen that an amount of the product (b) which exceeds the range specified for an embodiment of the present invention leads to a notable amount of wrinkling in the expanded particles, and the effects of surface wrinkling result in insufficient performance, with a noise occurrence risk index of 8 points (high noise occurrence risk).

From Comparative Example 12, it can be see that an amount of the butene copolymer polyethylene wax (c) which falls below the range specified for an embodiment of the present invention results in insufficient performance, with high frictional sound pressure and a noise occurrence risk index of 8 points (high noise occurrence risk).

From Comparative Example 13, it can be seen that an amount of the butene copolymer polyethylene wax (c) which exceeds the range specified for an embodiment of the present invention leads to a notable amount of wrinkling in the expanded particles, and the effects of surface wrinkling result in insufficient performance, with a noise occurrence risk index of 9 points (high noise occurrence risk).

Comparative Example 14 is a replications of PCT International Publication No. WO 2016/136875. In Comparative Example 14, the silicon-based composition A was used to reduce frictional noise. From Comparative Example 14, it can be seen that not adding the product (b) and the butene copolymer polyethylene wax (c) results in insufficient performance, with a noise occurrence risk index of 10 points (high noise occurrence risk).

In Comparative Example 15, the product (b) and the silicon-based composition A were used, but the butene copolymer polyethylene wax (c) was not added. In Comparative Example 16, the butene copolymer polyethylene wax (c) and the silicon-based composition A were used, but the product (b) was not added. From Comparative Examples 15 and 16, it can be seen that using the silicon-based composition A but omitting either the product (b) or the butene copolymer polyethylene wax (c) results in insufficient performance, with poor surface glossiness and a noise occurrence risk index of 9 points or greater (high noise occurrence risk).

### Industrial Applicability

An embodiment of the present invention makes it possible to obtain polyolefin-based resin expanded particles which enable a polyolefin-based resin in-mold foamed molded product that (i) exhibits reduced frictional noise and noise occurrence risk in the long term and (ii) has excellent surface glossiness. A polyolefin-based resin in-mold foamed molded product obtained by in-mold foam molding with use of polypropylene-based resin expanded particles in accordance with an embodiment of the present invention can be suitably used in a variety of applications such as shock-absorbing packing materials, shipping materials, thermal insulating materials, civil engineering and construction materials, and automotive components.

## Claims

1. Polyolefin-based resin expanded particles comprising:
100 parts by weight of a polyolefin-based resin (a);
not less than 3 parts by weight and not more than 10 parts by weight of a product (b) containing:
an olefin-based elastomer (Component 1);
a copolymer (Component 2) which differs from the Component 1 and is a copolymer of ethylene and at least one type of vinyl monomer; and
a higher fatty acid amide (Component 3);
not less than 2 parts by weight and not more than 10 parts by weight of a butene copolymer polyethylene wax (c); and
not less than 0.01 parts by weight and not more than 1 part by weight of a water absorbing substance (d),
wherein the polyolefin-based resin (a) is at least one selected from the group consisting of polyethylene-based resin and polypropylene-based resin, wherein the polyethylene-based resin is at least one selected from the group consisting of high-density polyethylene, medium-density polyethylene, low-density polyethylene, linear low-density polyethylene, and styrene-modified polyethylene-based resin or the polyethylene-based resin includes a comonomer which is at least one selected from the group consisting of 1-butene, 1-pentene, 1-hexene, 3,3-dimethyl-1-butene, 4-methyl-1-pentene, 4,4-dimethyl-1-pentene, and 1-octene and wherein the copolymer (Component 2) which differs from the Component 1 and is a copolymer of ethylene and at least one type of vinyl monomer is at least one type of copolymer selected from the group consisting of an ethylene-acrylic acid copolymer, an ethylene-methyl acrylate copolymer, an ethylene-methyl methacrylate copolymer, an ethylene-ethyl acrylate copolymer, an ethylene-isobutyl acrylate copolymer, an ethylene-n-butyl acrylate copolymer, an ethylene-2-ethylhexyl acrylate copolymer, an ethylene-ethyl acrylate-maleic anhydride copolymer, an ethylene-ethyl acrylate-glycidyl methacrylate copolymer, an ethylene-glycidyl methacrylate copolymer, an ethylene-vinyl acetate-glycidyl methacrylate copolymer, an ethylene-vinyl acetate copolymer, and saponified products of any of these.

2. The polyolefin-based resin expanded particles according to claim 1, wherein the polyolefin-based resin (a) is a polypropylene-based resin or a polyethylene-based resin.

3. The polyolefin-based resin expanded particles according to claim 1 or 2, wherein the water absorbing substance (d) is one or more types of water absorbing substances selected from among glycerin and polyethylene glycol.

4. The polyolefin-based resin expanded particles according to any one of claims 1 to 3, wherein the butene copolymer polyethylene wax (c) has a melting point of not lower than 40°C and not higher than 130°C,
which is determined in accordance with the description.

5. The polyolefin-based resin expanded particles according to any one of claims 1 to 4, wherein the olefin-based elastomer (Component 1) is at least one type of olefin-based elastomer selected from the group consisting of: (a) an ethylene-α-olefin copolymer rubber; (b) an ethylene-α-olefin-nonconjugated diene copolymer rubber; and (c) a graft copolymer whose backbone component is a polymer segment composed of an ethylene-α-olefin copolymer rubber and/or an ethylene-α-olefin-nonconjugated diene copolymer rubber, and whose side-chain component is a vinyl polymer segment formed from at least one type of vinyl-based monomer.

6. The polyolefin-based resin expanded particles according to any one of claims 1 to 5, wherein the higher fatty acid amide (Component 3) is at least one type of higher fatty acid amide selected from the group consisting of lauric acid amide, palmitic acid amide, stearic acid amide, behenic acid amide, erucic acid amide, oleic acid amide, brassidic acid amide, elaidic acid amide, methylene bis(stearic acid amide), methylene bis(lauric acid amide), ethylene bis(stearic acid amide), ethylene bis(lauric acid amide), methylene bis(oleic acid amide), methylene bis(erucic acid amide), ethylene bis(oleic acid amide), and ethylene bis(erucic acid amide).

7. A method of producing polyolefin-based resin expanded particles which method utilizes polyolefin-based resin particles and an expanding agent, the polyolefin-based resin expanded particles including:
100 parts by weight of a polyolefin-based resin (a);
not less than 3 parts by weight and not more than 10 parts by weight of a product (b) containing:
an olefin-based elastomer (Component 1);
a copolymer (Component 2) which differs from the Component 1 and is a copolymer of ethylene and at least one type of vinyl monomer; and
a higher fatty acid amide (Component 3);
not less than 2 parts by weight and not more than 10 parts by weight of a butene copolymer polyethylene wax (c); and
not less than 0.01 parts by weight and not more than 1 part by weight of a water absorbing substance (d),
the expanding agent being an inorganic expanding agent,
wherein the polyolefin-based resin (a) is at least one selected from the group consisting of polyethylene-based resin and polypropylene-based resin, wherein the polyethylene-based resin is at least one selected from the group consisting of high-density polyethylene, medium-density polyethylene, low-density polyethylene, linear low-density polyethylene, and styrene-modified polyethylene-based resin or the polyethylene-based resin includes a comonomer which is at least one selected from the group consisting of 1-butene, 1-pentene, 1-hexene, 3,3-dimethyl-1-butene, 4-methyl-1-pentene, 4,4-dimethyl-1-pentene, and 1-octene and wherein the copolymer (Component 2) which differs from the Component 1 and is a copolymer of ethylene and at least one type of vinyl monomer is at least one type of copolymer selected from the group consisting of an ethylene-acrylic acid copolymer, an ethylene-methyl acrylate copolymer, an ethylene-methyl methacrylate copolymer, an ethylene-ethyl acrylate copolymer, an ethylene-isobutyl acrylate copolymer, an ethylene-n-butyl acrylate copolymer, an ethylene-2-ethylhexyl acrylate copolymer, an ethylene-ethyl acrylate-maleic anhydride copolymer, an ethylene-ethyl acrylate-glycidyl methacrylate copolymer, an ethylene-glycidyl methacrylate copolymer, an ethylene-vinyl acetate-glycidyl methacrylate copolymer, an ethylene-vinyl acetate copolymer, and saponified products of any of these.

8. A polyolefin-based resin in-mold foamed molded product which uses the polyolefin-based resin expanded particles recited in any one of claims 1 to 6.

## Patentansprüche

1. Expandierte Harzteilchen auf Polyolefinbasis, umfassend:
100 Gewichtsteile eines Harzes auf Polyolefinbasis (a);
nicht weniger als 3 Gewichtsteile und nicht mehr als 10 Gewichtsteile eines Produkts (b), enthaltend:
ein Elastomer auf Olefinbasis (Komponente 1);
ein Copolymer (Komponente 2), welches sich von Komponente 1 unterscheidet und ein Copolymer aus Ethylen und mindestens einer Art von Vinylmonomer ist; und
ein höheres Fettsäureamid (Komponente 3);
nicht weniger als 2 Gewichtsteile und nicht mehr als 10 Gewichtsteile eines Buten-Copolymer-Polyethylenwachses (c); und
nicht weniger als 0,01 Gewichtsteile und nicht mehr als 1 Gewichtsteil einer wasserabsorbierenden Substanz (d),
wobei das Harz auf Polyolefinbasis (a) mindestens eines ist, ausgewählt aus der Gruppe bestehend aus einem Harz auf Polyethylenbasis und einem Harz auf Polypropylenbasis, wobei das Harz auf Polyethylenbasis mindestens eines ist, ausgewählt aus der Gruppe bestehend aus Polyethylen hoher Dichte, Polyethylen mittlerer Dichte, Polyethylen niedriger Dichte, linearem Polyethylen niedriger Dichte und styrolmodifiziertem Harz auf Polyethylenbasis oder das Harz auf Polyethylenbasis ein Comonomer beinhaltet, welches mindestens eines ist, ausgewählt aus der Gruppe bestehend aus 1-Buten, 1-Penten, 1-Hexen, 3,3-Dimethyl-1-buten, 4-Methyl-1-penten, 4,4-Dimethyl-1-penten und 1-Octen, und wobei das Copolymer (Komponente 2), welches sich von Komponente 1 unterscheidet und ein Copolymer aus Ethylen und mindestens einer Art von Vinylmonomer ist, mindestens eine Art von Copolymer ist, ausgewählt aus der Gruppe bestehend aus einem Ethylen-Acrylsäure-Copolymer, einem Ethylen-Methylacrylat-Copolymer, einem Ethylen-Methylmethacrylat-Copolymer, einem Ethylen-Ethylacrylat-Copolymer, einem Ethylen-Isobutylacrylat-Copolymer, einem Ethylen-n-Butylacrylat-Copolymer, einem Ethylen-2-Ethylhexylacrylat-Copolymer, einem Ethylen-Ethylacrylat-Maleinsäureanhydrid-Copolymer, einem Ethylen-Ethylacrylat-Glycidylmethacrylat-Copolymer, einem Ethylen-Glycidylmethacrylat-Copolymer, einem Ethylen-Vinylacetat-Glycidylmethacrylat-Copolymer, einem Ethylen-Vinylacetat-Copolymer sowie verseiften Produkten jeder dieser Copolymere.

2. Die expandierten Harzteilchen auf Polyolefinbasis gemäß Anspruch 1, wobei das Harz auf Polyolefinbasis (a) ein Harz auf Polypropylenbasis oder ein Harz auf Polyethylenbasis ist.

3. Die expandierten Harzteilchen auf Polyolefinbasis gemäß Anspruch 1 oder 2, wobei die wasserabsorbierende Substanz (d) eine oder mehrere Arten von wasserabsorbierenden Substanzen ist, welche aus Glycerol und Polyethylenglykol ausgewählt sind.

4. Die expandierten Harzteilchen auf Polyolefinbasis gemäß einem der Ansprüche 1 bis 3, wobei das Buten-Copolymer-Polyethylenwachs (c) einen Schmelzpunkt von nicht niedriger als 40 °C und nicht höher als 130 °C aufweist,
der gemäß der Beschreibung bestimmt wird.

5. Die expandierten Harzteilchen auf Polyolefinbasis gemäß einem der Ansprüche 1 bis 4, wobei das Elastomer auf Olefinbasis (Komponente 1) mindestens eine Art von Elastomer auf Olefinbasis ist, ausgewählt aus der Gruppe bestehend aus: (a) einem Ethylen-α-Olefin-Copolymer-Kautschuk; (b) einem Ethylen-α-Olefin-nichtkonjugiertem-Dien-Copolymer-Kautschuk; und (c) einem Pfropfcopolymer, dessen Hauptgerüstkomponente ein Polymersegment zusammengesetzt aus einem Ethylen-α-Olefin-Copolymerkautschuk und/oder einem Ethylen-α-Olefin-nichtkonjugiertem-Dien-Copolymerkautschuk ist, und dessen Seitenkettenkomponente ein Vinylpolymersegment ist, welches aus mindestens einer Art von Monomer auf Vinylbasis gebildet ist.

6. Die expandierten Harzteilchen auf Polyolefinbasis gemäß einem der Ansprüche 1 bis 5, wobei das höhere Fettsäureamid (Komponente 3) mindestens eine Art von höherem Fettsäureamid ist, ausgewählt aus der Gruppe bestehend aus Laurinsäureamid, Palmitinsäureamid, Stearinsäureamid, Behensäureamid, Erucasäureamid, Oleinsäureamid, Brassidinsäureamid, Elaidinsäureamid, Methylenbis(stearinsäureamid), Methylenbis(laurinsäureamid), Ethylenbis(stearinsäureamid), Ethylenbis-(laurinsäureamid), Methylenbis(Oleinsäureamid), Methylenbis(erucasäureamid), Ethylenbis(Oleinsäureamid) und Ethylenbis(erucasäureamid).

7. Ein Verfahren zur Herstellung von expandierten Harzteilchen auf Polyolefinbasis, wobei bei diesem Verfahren Harzteilchen auf Polyolefinbasis und ein Treibmittel verwendet werden, wobei die expandierten Harzteilchen auf Polyolefinbasis enthalten:
100 Gewichtsteile eines Harzes auf Polyolefinbasis (a);
nicht weniger als 3 Gewichtsteile und nicht mehr als 10 Gewichtsteile eines Produkts (b), enthaltend:
ein Elastomer auf Olefinbasis (Komponente 1);
ein Copolymer (Komponente 2), welches sich von Komponente 1 unterscheidet und ein Copolymer aus Ethylen und mindestens einer Art von Vinylmonomer ist; und
ein höheres Fettsäureamid (Komponente 3);
nicht weniger als 2 Gewichtsteile und nicht mehr als 10 Gewichtsteile eines Buten-Copolymer-Polyethylenwachses (c); und
nicht weniger als 0,01 Gewichtsteile und nicht mehr als 1 Gewichtsteil einer wasserabsorbierenden Substanz (d),
wobei das Treibmittel ein anorganisches Treibmittel ist,
wobei das Harz auf Polyolefinbasis (a) mindestens eines ist, ausgewählt aus der Gruppe bestehend aus einem Harz auf Polyethylenbasis und einem Harz auf Polypropylenbasis, wobei das Harz auf Polyethylenbasis mindestens eines ist, ausgewählt aus der Gruppe bestehend aus Polyethylen hoher Dichte, Polyethylen mittlerer Dichte, Polyethylen niedriger Dichte, linearem Polyethylen niedriger Dichte und styrolmodifiziertem Harz auf Polyethylenbasis, oder das Harz auf Polyethylenbasis ein Comonomer beinhaltet, welches mindestens eines ist, ausgewählt aus der Gruppe bestehend aus 1-Buten, 1-Penten, 1-Hexen, 3,3-Dimethyl-1-buten, 4-Methyl-1-penten, 4,4-Dimethyl-1-penten und 1-Octen, und wobei das Copolymer (Komponente 2), welches sich von Komponente 1 unterscheidet und ein Copolymer aus Ethylen und mindestens einer Art von Vinylmonomer ist, mindestens eine Art von Copolymer ist, ausgewählt aus der Gruppe bestehend aus einem Ethylen-Acrylsäure-Copolymer, einem Ethylen-Methylacrylat-Copolymer, einem Ethylen-Methylmethacrylat-Copolymer, einem Ethylen-Ethylacrylat-Copolymer, einem Ethylen-Isobutylacrylat-Copolymer, einem Ethylen-n-Butylacrylat-Copolymer, einem Ethylen-2-Ethylhexylacrylat-Copolymer, einem Ethylen-Ethylacrylat-Maleinsäureanhydrid-Copolymer, einem Ethylen-Ethylacrylat-Glycidylmethacrylat-Copolymer, einem Ethylen-Glycidylmethacrylat-Copolymer, einem Ethylen-Vinylacetat-Glycidylmethacrylat-Copolymer, einem Ethylen-Vinylacetat-Copolymer sowie verseiften Produkten jeder dieser Copolymere.

8. Ein durch In-Mould-Schäumen geformtes Harzprodukt auf Polyolefinbasis, welches die in einem der Ansprüche 1 bis 6 genannten expandierten Harzteilchen auf Polyolefinbasis verwendet.

## Revendications

1. Particules expansées de résine à base de polyoléfine comprenant :
100 parties en poids d'une résine à base de polyoléfine (a) ;
au moins 3 parties en poids et au plus 10 parties en poids d'un produit (b) contenant :
un élastomère à base d'oléfine (composant 1) ;
un copolymère (composant 2) qui diffère du composant 1 et qui est un copolymère d'éthylène et d'au moins un type de monomère de vinyle ; et
un amide d'acide gras supérieur (composant 3) ;
au moins 2 parties en poids et au plus 10 parties en poids d'une cire de polyéthylène copolymère de butène (c) ; et
au moins 0,01 partie en poids et au plus 1 partie en poids d'une substance absorbant l'eau (d),
dans lesquelles la résine à base de polyoléfine (a) est au moins l'une choisie dans le groupe constitué par une résine à base de polyéthylène et une résine à base de polypropylène, dans lesquelles la résine à base de polyéthylène est au moins l'un choisi dans le groupe constitué par le polyéthylène haute densité, le polyéthylène moyenne densité, le polyéthylène basse densité, le polyéthylène basse densité linéaire, et une résine à base de polyéthylène modifiée par du styrène, ou la résine à base de polyéthylène inclut un comonomère qui est au moins l'un choisi dans le groupe constitué par le 1-butène, le 1-pentène, le 1-hexène, le 3,3-diméthyl-1-butène, le 4-méthyl-1-pentène, le 4,4-diméthyl-1-pentène et le 1-octène, et dans lesquelles le copolymère (composant 2), qui diffère du composant 1 et est un copolymère d'éthylène et d'au moins un type de monomère de vinyle, est au moins un type de copolymère choisi dans le groupe constitué par un copolymère d'éthylène-acide acrylique, un copolymère d'éthylène-acrylate de méthyle, un copolymère d'éthylène-méthacrylate de méthyle, un copolymère d'éthylène-acrylate d'éthyle, un copolymère d'éthylène-acrylate d'isobutyle, un copolymère d'éthylène-acrylate de n-butyle, un copolymère d'éthylène-acrylate de 2-éthylhexyle, un copolymère d'éthylène-acrylate d'éthyle-anhydride maléique, un copolymère d'éthylène-acrylate d'éthyle-méthacrylate de glycidyle, un copolymère d'éthylène-méthacrylate de glycidyle, un copolymère d'éthylène-acétate de vinyle-méthacrylate de glycidyle, un copolymère d'éthylène-acétate de vinyle, et les produits saponifiés de n'importe lesquels de ceux-ci.

2. Particules expansées de résine à base de polyoléfine selon la revendication 1, dans lesquelles la résine à base de polyoléfine (a) est une résine à base de polypropylène ou une résine à base de polyéthylène.

3. Particules expansées de résine à base de polyoléfine selon la revendication 1 ou 2, dans lesquelles la substance absorbant l'eau (d) est un ou plusieurs types de substances absorbant l'eau choisies parmi le glycérol et le polyéthylèneglycol.

4. Particules expansées de résine à base de polyoléfine selon l'une quelconque des revendications 1 à 3, dans lesquelles la cire de polyéthylène copolymère de butène (c) a un point de fusion non inférieur à 40 °C et non supérieur à 130 °C, qui est déterminé conformément à la description.

5. Particules expansées de résine à base de polyoléfine selon l'une quelconque des revendications 1 à 4, dans lesquelles l'élastomère à base d'oléfine (composant 1) est au moins un type d'élastomère à base d'oléfine choisi dans le groupe constitué par : (a) un caoutchouc copolymère d'éthylène-α-oléfine ; (b) un caoutchouc copolymère d'éthylène-α-oléfine-diène non conjugué ; et (c) un copolymère greffé dont le composant de charpente est un segment polymère composé d'un caoutchouc copolymère d'éthylène-α-oléfine et/ou d'un caoutchouc copolymère d'éthylène-α-oléfine-diène non conjugué, et dont le composant de chaîne latérale est un segment polymère de vinyle formé à partir d'au moins un type de monomère à base de vinyle.

6. Particules expansées de résine à base de polyoléfine selon l'une quelconque des revendications 1 à 5, dans lesquelles l'amide d'acide gras supérieur (composant 3) est au moins un type d'amide d'acide gras supérieur choisi dans le groupe constitué par l'amide d'acide laurique, l'amide d'acide palmitique, l'amide d'acide stéarique, l'amide d'acide béhénique, l'amide d'acide érucique, l'amide d'acide oléique, l'amide d'acide brassidique, l'amide d'acide élaïdique, le méthylènebis(amide d'acide stéarique), le méthylènebis(amide d'acide laurique), l'éthylènebis(amide d'acide stéarique), l'éthylènebis(amide d'acide laurique), le méthylènebis(amide d'acide oléique), le méthylènebis(amide d'acide érucique), l'éthylènebis(amide d'acide oléique) et l'éthylènebis(amide d'acide érucique).

7. Méthode de production de particules expansées de résine à base de polyoléfine, laquelle méthode utilise des particules de résine à base de polyoléfine et un agent d'expansion, les particules expansées de résine à base de polyoléfine incluant :
100 parties en poids d'une résine à base de polyoléfine (a) ;
au moins 3 parties en poids et au plus 10 parties en poids d'un produit (b) contenant :
un élastomère à base d'oléfine (composant 1) ;
un copolymère (composant 2) qui diffère du composant 1 et qui est un copolymère d'éthylène et d'au moins un type de monomère de vinyle ; et
un amide d'acide gras supérieur (composant 3) ;
au moins 2 parties en poids et au plus 10 parties en poids d'une cire de polyéthylène copolymère de butène (c) ; et
au moins 0,01 partie en poids et au plus 1 partie en poids d'une substance absorbant l'eau (d),
l'agent d'expansion étant un agent d'expansion inorganique,
dans laquelle la résine à base de polyoléfine (a) est au moins l'une choisie dans le groupe constitué par une résine à base de polyéthylène et une résine à base de polypropylène, dans laquelle la résine à base de polyéthylène est au moins l'un choisi dans le groupe constitué par le polyéthylène haute densité, le polyéthylène moyenne densité, le polyéthylène basse densité, le polyéthylène basse densité linéaire, et une résine à base de polyéthylène modifiée par du styrène, ou la résine à base de polyéthylène inclut un comonomère qui est au moins l'un choisi dans le groupe constitué par le 1-butène, le 1-pentène, le 1-hexène, le 3,3-diméthyl-1-butène, le 4-méthyl-1-pentène, le 4,4-diméthyl-1-pentène et le 1-octène, et dans laquelle le copolymère (composant 2), qui diffère du composant 1 et est un copolymère d'éthylène et d'au moins un type de monomère de vinyle, est au moins un type de copolymère choisi dans le groupe constitué par un copolymère d'éthylène-acide acrylique, un copolymère d'éthylène-acrylate de méthyle, un copolymère d'éthylène-méthacrylate de méthyle, un copolymère d'éthylène-acrylate d'éthyle, un copolymère d'éthylène-acrylate d'isobutyle, un copolymère d'éthylène-acrylate de n-butyle, un copolymère d'éthylène-acrylate de 2-éthylhexyle, un copolymère d'éthylène-acrylate d'éthyle-anhydride maléique, un copolymère d'éthylène-acrylate d'éthyle-méthacrylate de glycidyle, un copolymère d'éthylène-méthacrylate de glycidyle, un copolymère d'éthylène-acétate de vinyle-méthacrylate de glycidyle, un copolymère d'éthylène-acétate de vinyle, et les produits saponifiés de n'importe lesquels de ceux-ci.

8. Produit moulé expansé dans le moule en résine à base de polyoléfine qui utilise les particules expansées de résine à base de polyoléfine définies dans l'une quelconque des revendications 1 à 6.
